(19) Europäisches Patentamt / European Patent Office / Office européen des brevets

(11) **EP 4 672 765 A1**

(12) **EUROPEAN PATENT APPLICATION**

(43) Date of publication:
**31.12.2025   Bulletin 2026/01**

(21) Application number: **24306004.3**

(22) Date of filing: **24.06.2024**

(51) International Patent Classification (IPC):
*H04N 21/442* (2011.01)   *H04N 21/466* (2011.01)
*H04N 21/658* (2011.01)   *H04N 21/234* (2011.01)
*H04N 21/24* (2011.01)   *H04N 21/2662* (2011.01)
*H04N 21/44* (2011.01)   *H04N 21/462* (2011.01)
*H04N 21/61* (2011.01)   *G06N 3/045* (2023.01)
*G06N 3/0495* (2023.01)

(52) Cooperative Patent Classification (CPC):
H04N 21/4424; G06N 3/045; G06N 3/0495;
H04N 21/23418; H04N 21/2405; H04N 21/2662;
H04N 21/44008; H04N 21/44209; H04N 21/44245;
H04N 21/4621; H04N 21/4666; H04N 21/6131;
H04N 21/6181

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **InterDigital CE Patent Holdings, SAS 75017 Paris (FR)**

(72) Inventors:
• **ONNO, Stephane**
  **35760 SAINT GREGOIRE (FR)**
• **FILOCHE, Thierry**
  **35410 CHATEAUGIRON (FR)**
• **QUINQUIS, Cyril**
  **35520 MELESSE (FR)**

(74) Representative: **Vossius & Partner Patentanwälte Rechtsanwälte mbB Siebertstraße 3 81675 München (DE)**

(54) **TENSOR-BASED COMPRESSION PROFILE FOR SPLIT POINT CONFIGURATIONS**

(57)    Systems, methods, and instrumentalities are disclosed associated with tensor-based compression profile(s) for split point configuration(s). Compression profile(s) may be selected for a (e.g., each) tensor for a candidate split point configuration to negotiate. Compression profiles may apply to intermediate data tensors to fulfil an application task (e.g., data processing task). The compression profiles may be negotiated between endpoints. Endpoints may determine a compression scheme to apply to a tensor based on a negotiated split point configuration. The determined compression scheme may be applied to a tensor. Data may be sent (e.g., via a bitstream) between endpoints. The data may include a compressed tensor and/or split point information.

**FIG. 7**

**Description**

**BACKGROUND**

Video coding systems may be used to compress digital video signals, for example, to reduce the storage and/or transmission bandwidth needed for such signals. Video coding systems may include, for example, wavelet-based systems, object-based systems, and/or block-based systems, such as a block-based hybrid video coding system. Current tools used for compression and processing for point clouds may not be adequate.

**SUMMARY**

Systems, methods, and instrumentalities are disclosed associated with tensor-based compression profile(s) for split point configuration(s). Compression profile(s) may be selected for a (e.g., each) tensor for a candidate split point configuration to negotiate. Compression profiles may apply to intermediate data tensors to fulfil an application task (e.g., data processing task). The compression profiles may be negotiated between endpoints. Endpoints may determine a compression scheme to apply to a tensor based on a negotiated split point configuration. The determined compression scheme may be applied to a tensor. Data may be sent (e.g., via a bitstream) between endpoints. The data may include a compressed tensor and/or split point information.

A device may perform tensor-based compression for split point configurations. For example, a media encoding device may perform tensor-based compression for split point configurations. For example, a media decoding device may perform tensor-based compression for split point configurations. The device may obtain an intermediate data tensor. The intermediate data tensor may be associated with intermediate data of a data processing model. The data processing model may be an artificial intelligence (AI) processing model. The device may determine (e.g., for the intermediate data tensor) a performance threshold associated with a data processing task to be performed by the device. The data processing task may include an AI task. The performance threshold may indicate a minimum performance for performing the AI task. The device may determine a tensor characteristic of the intermediate data tensor. The tensor characteristic may include a data size, a tensor name, a tensor type, a tensor shape and/or the like. The device may determine the Neural network layer where the intermediate data tensor originates and the Neural layer where the intermediate data tensor is input. The device may determine a compression profile associated with the intermediate data tensor. The device may determine a compression profile associated with the intermediate data tensor, for example, based on the performance threshold associated with the data processing tasks to be performed by the device, the tensor characteristic of the intermediate data tensor, and/or a performance metric associated with the compression profile. The device may determine the impact on the performance metric of applying compression profiles to intermediate data tensors which may vary depending on to the characteristic of the neural network, such as the deep neural network types (Multi-Layer Perceptrons (MLP), Convolutional Neural Networks (CNN), Recurrent Neural network (RNN) and/or the like, the network layer type of the input tensors (convolution, activation, full connected, pooling, batch normalization and/or the like).The performance metric associated with the compression profile may include a performance score associated with the compression profile. The minimum performance for performing the AI task may include a minimum accuracy or a maximum latency (e.g., required) for performing the data processing task. The device may send (e.g., via a control plane) an indication of an association of the compression profile with the intermediate data tensor. The device may generate a compressed intermediate data tensor, for example, based on the intermediate data tensor and/or the compression profile associated with the intermediate data tensor. The device may send the compressed intermediate data tensor to a media decoding device (e.g., different media decoding device). The device may include (e.g., in a header of an intermediate data packer) one or more indications associated with a split point profile. The one or more indications may include a data compression indication and/or a tensor identifier for the intermediate data tensor. The data compression indication may indicate whether intermediate data represented by the intermediate data tensor is compressed. The one or more indications associated with the split point profile may further include an indication of a presence or absence of a split point identifier, a number of tensor elements associated with the intermediate data tensor, a length of the intermediate data tensor, a tensor array list associated with a bitstream (e.g., via which the intermediate data may be sent), a tensor bitstream data, and/or the like.

In examples, the device may determine an available bandwidth for a downlink (DL) or uplink (UL) transmission associated with the device and/or an amount of data to be transmitted via the DL or UL transmission. The compression profile associated with the intermediate data tensor may be determined further based on the available bandwidth for the DL or UL transmission and/or the amount of data to be transmitted via the DL or UL transmission. For example, the intermediate data tensor may be compressed more, for example, if the bandwidth available is less than a threshold. Otherwise, the intermediate data tensor may be compressed less, for example, if the bandwidth available is greater than or equal to a threshold.

In examples, the device may determine a processing capability associated with the device and/or a processing capability associated with a media decoding device. The compression profile associated with the intermediate data tensor may be determined further based on the processing capability associated with the device and/or the processing capability associated with the media decoding device. For example, the intermediate data tensor may be compressed more, for example, if computing resources/memory is low (e.g., below a threshold). Otherwise, the intermediate data tensor may be compressed less (e.g., if computing resources/memory is not low (e.g., greater than or equal to a threshold)).

In examples, the device may determine compression profiles available on other endpoints. Different endpoints may implement different compression scheme or profile, depending on the processing capabilities, on the operating system in used, on the user's or application provider choice to enable compression profile on endpoints.

A device (e.g., media decoding device) may obtain (e.g., via a control plane) an indication of an association of a compression profile with an intermediate data tensor. The device may receive an intermediate data tensor identifier, for example, in a split point profile of a data processing model. The device may obtain the intermediate data tensor. The device may determine that the split point profile is applicable to the intermediate data tensor, for example, based on the intermediate data tensor identifier. The device may generate a decompressed intermediate data tensor, for example, based on the split point profile and/or the association of the compression profile with the intermediate data tensor. The device may determine an output of the data processing model, for example, based on the decompressed intermediate data tensor. The device may send the output of the data processing model. For example, the device may receive (e.g., via a header of an intermediate data packet) one or more indications associated with the split point profile. The one or more indications may include the intermediate data tensor identifier and/or data compression indication. The data compression indication may indicate whether intermediate data represented by the intermediate data tensor is compressed. The one or more indications associated with the split point profile may further include an indication of a presence or absence of a split point identifier, a number of tensor elements associated with the intermediate data tensor, a length of the intermediate data tensor, a tensor array list associated with a bitstream (e.g., via which the intermediate data tensor may be sent), tensor bitstream data, and/or the like.

## BRIEF DESCRIPTION OF THE DRAWINGS

FIG. 1A is a system diagram illustrating an example communications system in which one or more disclosed embodiments may be implemented.

FIG. 1B is a system diagram illustrating an example wireless transmit/receive unit (WTRU) that may be used within the communications system illustrated in FIG. 1A according to an embodiment.

FIG. 1C is a system diagram illustrating an example radio access network (RAN) and an example core network (CN) that may be used within the communications system illustrated in FIG. 1A according to an embodiment.

FIG. 1D is a system diagram illustrating a further example RAN and a further example CN that may be used within the communications system illustrated in FIG. 1A according to an embodiment.

FIG. 2 is a diagram showing an example video encoder.

FIG. 3 is a diagram showing an example of a video decoder.

FIG. 4 is a diagram showing an example of a system in which various aspects and examples may be implemented.

FIG. 5 illustrates an example of split inference between a WTRU and the network with a media data source in the WTRU.

FIG. 6 illustrates an example split inference between a WTRU and the network with a media data source in the network.

FIG. 7 illustrates an example of architecture for split inferencing using a tensor-based compression configuration profile.

FIG. 8 illustrates an example basic intermediate data bitstream.

**DETAILED DESCRIPTION**

A detailed description of illustrative embodiments will now be described with reference to the various Figures. Although this description provides a detailed example of possible implementations, it should be noted that the details are intended to be exemplary and in no way limit the scope of the application.

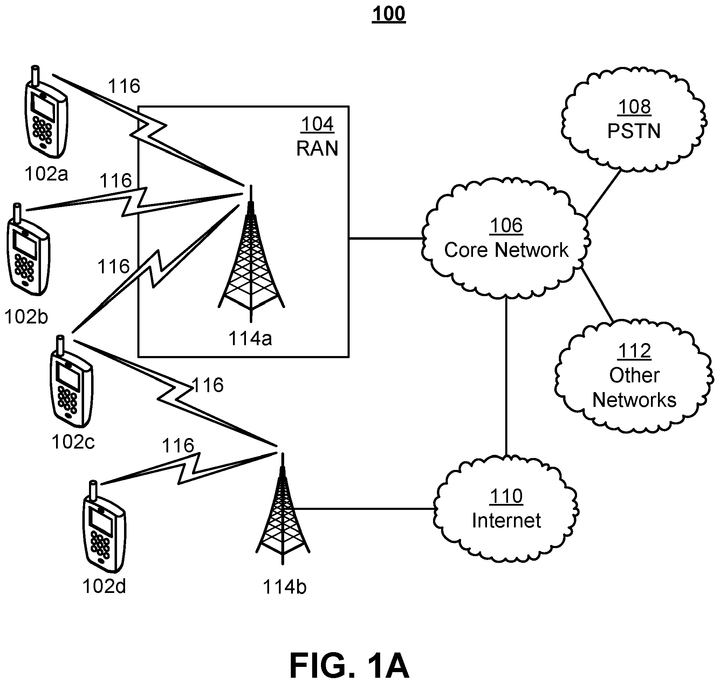

FIG. 1A is a diagram illustrating an example communications system 100 in which one or more disclosed embodiments may be implemented. The communications system 100 may be a multiple access system that provides content, such as voice, data, video, messaging, broadcast, etc., to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), zero-tail unique-word DFT-Spread OFDM (ZT UW DTS-s OFDM), unique word OFDM (UW-OFDM), resource block-filtered OFDM, filter bank multicarrier (FBMC), and the like.

As shown in FIG. 1A, the communications system 100 may include wireless transmit/receive units (WTRUs) 102a, 102b, 102c, 102d, a RAN 104/113, a CN 106/115, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d, any of which may be referred to as a "station" and/or a "STA", may be configured to transmit and/or receive wireless signals and may include a user equipment (UE), a mobile station, a fixed or mobile subscriber unit, a subscription-based unit, a pager, a cellular telephone, a personal digital assistant (PDA), a smartphone, a laptop, a netbook, a personal computer, a wireless sensor, a hotspot or Mi-Fi device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. Any of the WTRUs 102a, 102b, 102c and 102d may be interchangeably referred to as a UE.

The communications systems 100 may also include a base station 114a and/or a base station 114b. Each of the base stations 114a, 114b may be any type of device configured to wirelessly interface with at least one of the WTRUs 102a, 102b, 102c, 102d to facilitate access to one or more communication networks, such as the CN 106/115, the Internet 110, and/or the other networks 112. By way of example, the base stations 114a, 114b may be a base transceiver station (BTS), a Node-B, an eNode B, a Home Node B, a Home eNode B, a gNB, a NR NodeB, a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104/113, which may also include other base stations and/or network elements (not shown), such as a base station controller (BSC), a radio network controller (RNC), relay nodes, etc. The base station 114a and/or the base station 114b may be configured to transmit and/or receive wireless signals on one or more carrier frequencies, which may be referred to as a cell (not shown). These frequencies may be in licensed spectrum, unlicensed spectrum, or a combination of licensed and unlicensed spectrum. A cell may provide coverage for a wireless service to a specific geographical area that may be relatively fixed or that may change over time. The cell may further be divided into cell sectors. For example, the cell associated with the base station 114a may be divided into three sectors. Thus, in one embodiment, the base station 114a may include three transceivers, i.e., one for each sector of the cell. In an embodiment, the base station 114a may employ multiple-input multiple output (MIMO) technology and may utilize multiple transceivers for each sector of the cell. For example, beamforming may be used to transmit and/or receive signals in desired spatial directions.

The base stations 114a, 114b may communicate with one or more of the WTRUs 102a, 102b, 102c, 102d over an air interface 116, which may be any suitable wireless communication link (e.g., radio frequency (RF), microwave, centimeter wave, micrometer wave, infrared (IR), ultraviolet (UV), visible light, etc.). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104/113 and the WTRUs 102a, 102b, 102c may implement a radio technology such as Universal Mobile Telecommunications System (UMTS) Terrestrial Radio Access (UTRA), which may establish the air interface 115/116/117 using wideband CDMA (WCDMA). WCDMA may include communication protocols such as High-Speed Packet Access (HSPA) and/or Evolved HSPA (HSPA+). HSPA may include High-Speed Downlink (DL) Packet Access (HSDPA) and/or High-Speed UL Packet Access (HSUPA).

In an embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A) and/or LTE-Advanced Pro (LTE-A Pro).

In an embodiment, the base station 114a and the WTRUs 102a, 102b, 102c may implement a radio technology such as NR Radio Access , which may establish the air interface 116 using New Radio (NR).

In an embodiment, the base station 114a and the WTRUs 102a, 102b, 102c may implement multiple radio access technologies. For example, the base station 114a and the WTRUs 102a, 102b, 102c may implement LTE radio access and NR radio access together, for instance using dual connectivity (DC) principles. Thus, the air interface utilized by WTRUs 102a, 102b, 102c may be characterized by multiple types of radio access technologies and/or transmissions sent to/from multiple types of base stations (e.g., an eNB and a gNB).

In other embodiments, the base station 114a and the WTRUs 102a, 102b, 102c may implement radio technologies such as IEEE 802.11 (i.e., Wireless Fidelity (WiFi), IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE (GERAN), and the like.

The base station 114b in FIG. 1A may be a wireless router, Home Node B, Home eNode B, or access point, for example, and may utilize any suitable RAT for facilitating wireless connectivity in a localized area, such as a place of business, a home, a vehicle, a campus, an industrial facility, an air corridor (e.g., for use by drones), a roadway, and the like. In one embodiment, the base station 114b and the WTRUs 102c, 102d may implement a radio technology such as IEEE 802.11 to establish a wireless local area network (WLAN). In an embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT (e.g., WCDMA, CDMA2000, GSM, LTE, LTE-A, LTE-A Pro, NR etc.) to establish a picocell or femtocell. As shown in FIG. 1A, the base station 114b may have a direct connection to the Internet 110. Thus, the base station 114b may not be required to access the Internet 110 via the CN 106/115.

The RAN 104/113 may be in communication with the CN 106/115, which may be any type of network configured to provide voice, data, applications, and/or voice over internet protocol (VoIP) services to one or more of the WTRUs 102a, 102b, 102c, 102d. The data may have varying quality of service (QoS) requirements, such as differing throughput requirements, latency requirements, error tolerance requirements, reliability requirements, data throughput requirements, mobility requirements, and the like. The CN 106/115 may provide call control, billing services, mobile location-based services, pre-paid calling, Internet connectivity, video distribution, etc., and/or perform high-level security functions, such as user authentication. Although not shown in FIG. 1A, it will be appreciated that the RAN 104/113 and/or the CN 106/115 may be in direct or indirect communication with other RANs that employ the same RAT as the RAN 104/113 or a different RAT. For example, in addition to being connected to the RAN 104/113, which may be utilizing a NR radio technology, the CN 106/115 may also be in communication with another RAN (not shown) employing a GSM, UMTS, CDMA 2000, WiMAX, E-UTRA, or WiFi radio technology.

The CN 106/115 may also serve as a gateway for the WTRUs 102a, 102b, 102c, 102d to access the PSTN 108, the Internet 110, and/or the other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and/or the internet protocol (IP) in the TCP/IP internet protocol suite. The networks 112 may include wired and/or wireless communications networks owned and/or operated by other service providers. For example, the networks 112 may include another CN connected to one or more RANs, which may employ the same RAT as the RAN 104/113 or a different RAT.

Some or all of the WTRUs 102a, 102b, 102c, 102d in the communications system 100 may include multi-mode capabilities (e.g., the WTRUs 102a, 102b, 102c, 102d may include multiple transceivers for communicating with different wireless networks over different wireless links). For example, the WTRU 102c shown in FIG. 1A may be configured to communicate with the base station 114a, which may employ a cellular-based radio technology, and with the base station 114b, which may employ an IEEE 802 radio technology.

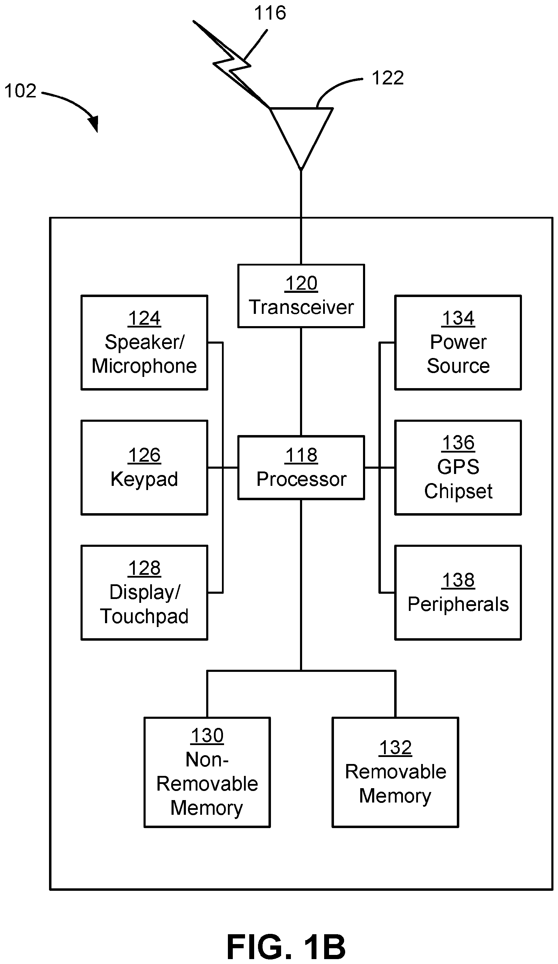

FIG. 1B is a system diagram illustrating an example WTRU 102. As shown in FIG. 1B, the WTRU 102 may include a processor 118, a transceiver 120, a transmit/receive element 122, a speaker/microphone 124, a keypad 126, a display/touchpad 128, non-removable memory 130, removable memory 132, a power source 134, a global positioning system (GPS) chipset 136, and/or other peripherals 138, among others. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While FIG. 1B depicts the processor 118 and the transceiver 120 as separate components, it will be appreciated that the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In an embodiment, the transmit/receive element 122 may be an emitter/detector configured to transmit and/or receive IR, UV, or visible light signals, for example. In yet another embodiment, the transmit/receive element 122 may be configured to transmit and/or receive both RF and light signals. It will be appreciated that the transmit/receive element 122 may be configured to transmit and/or receive any combination of wireless signals.

Although the transmit/receive element 122 is depicted in FIG. 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 (e.g., multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as NR and IEEE 802.11, for example.

The processor 118 of the WTRU 102 may be coupled to, and may receive user input data from, the speaker/microphone 124, the keypad 126, and/or the display/touchpad 128 (e.g., a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries (e.g., nickel-cadmium (NiCd), nickel-zinc (NiZn), nickel metal hydride (NiMH), lithium-ion (Li-ion), etc.), solar cells, fuel cells, and the like.

The processor 118 may also be coupled to the GPS chipset 136, which may be configured to provide location information (e.g., longitude and latitude) regarding the current location of the WTRU 102. In addition to, or in lieu of, the information from the GPS chipset 136, the WTRU 102 may receive location information over the air interface 116 from a base station (e.g., base stations 114a, 114b) and/or determine its location based on the timing of the signals being received from two or more nearby base stations. It will be appreciated that the WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs and/or video), a universal serial bus (USB) port, a vibration device, a television transceiver, a hands free headset, a Bluetooth® module, a frequency modulated (FM) radio unit, a digital music player, a media player, a video game player module, an Internet browser, a Virtual Reality and/or Augmented Reality (VR/AR) device, an activity tracker, and the like. The peripherals 138 may include one or more sensors, the sensors may be one or more of a gyroscope, an accelerometer, a hall effect sensor, a magnetometer, an orientation sensor, a proximity sensor, a temperature sensor, a time sensor; a geolocation sensor; an altimeter, a light sensor, a touch sensor, a magnetometer, a barometer, a gesture sensor, a biometric sensor, and/or a humidity sensor.

The WTRU 102 may include a full duplex radio for which transmission and reception of some or all of the signals (e.g., associated with particular subframes for both the UL (e.g., for transmission) and downlink (e.g., for reception) may be concurrent and/or simultaneous. The full duplex radio may include an interference management unit to reduce and or substantially eliminate self-interference via either hardware (e.g., a choke) or signal processing via a processor (e.g., a separate processor (not shown) or via processor 118). In an embodiment, the WRTU 102 may include a half-duplex radio for which transmission and reception of some or all of the signals (e.g., associated with particular subframes for either the UL (e.g., for transmission) or the downlink (e.g., for reception)).

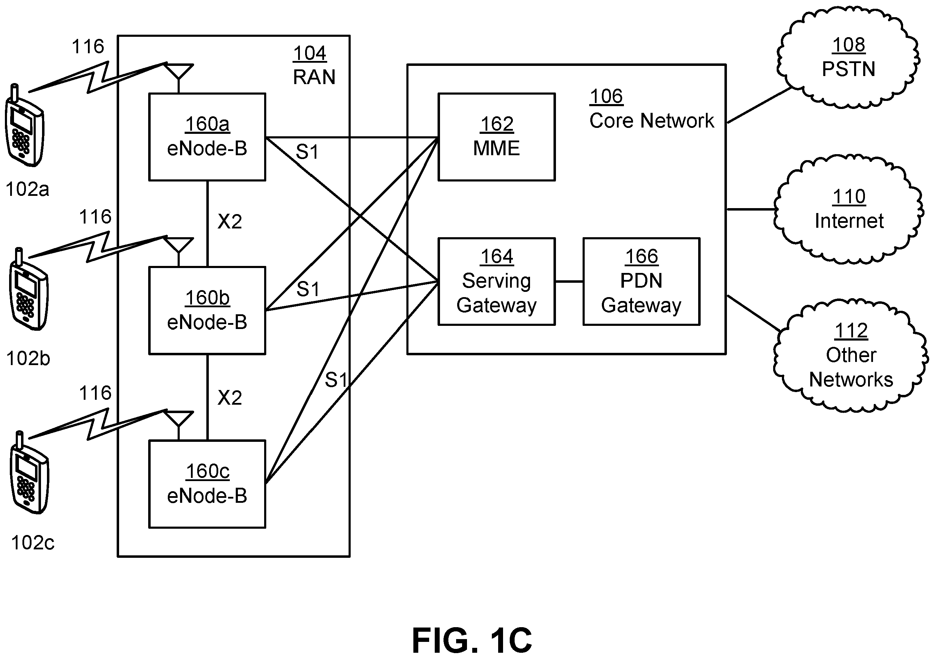

FIG. 1C is a system diagram illustrating the RAN 104 and the CN 106 according to an embodiment. As noted above, the RAN 104 may employ an E-UTRA radio technology to communicate with the WTRUs 102a, 102b, 102c over the air interface 116. The RAN 104 may also be in communication with the CN 106.

The RAN 104 may include eNode-Bs 160a, 160b, 160c, though it will be appreciated that the RAN 104 may include any number of eNode-Bs while remaining consistent with an embodiment. The eNode-Bs 160a, 160b, 160c may each include one or more transceivers for communicating with the WTRUs 102a, 102b, 102c over the air interface 116. In one embodiment, the eNode-Bs 160a, 160b, 160c may implement MIMO technology. Thus, the eNode-B 160a, for example, may use multiple antennas to transmit wireless signals to, and/or receive wireless signals from, the WTRU 102a.

Each of the eNode-Bs 160a, 160b, 160c may be associated with a particular cell (not shown) and may be configured to handle radio resource management decisions, handover decisions, scheduling of users in the UL and/or DL, and the like. As shown in FIG. 1C, the eNode-Bs 160a, 160b, 160c may communicate with one another over an X2 interface.

The CN 106 shown in FIG. 1C may include a mobility management entity (MME) 162, a serving gateway (SGW) 164, and a packet data network (PDN) gateway (or PGW) 166. While each of the foregoing elements is depicted as part of the CN 106, it will be appreciated that any of these elements may be owned and/or operated by an entity other than the CN operator.

The MME 162 may be connected to each of the eNode-Bs 162a, 162b, 162c in the RAN 104 via an S1 interface and may serve as a control node. For example, the MME 162 may be responsible for authenticating users of the WTRUs 102a, 102b, 102c, bearer activation/deactivation, selecting a particular serving gateway during an initial attach of the WTRUs 102a, 102b, 102c, and the like. The MME 162 may provide a control plane function for switching between the RAN 104 and other RANs (not shown) that employ other radio technologies, such as GSM and/or WCDMA.

The SGW 164 may be connected to each of the eNode Bs 160a, 160b, 160c in the RAN 104 via the S1 interface. The SGW 164 may generally route and forward user data packets to/from the WTRUs 102a, 102b, 102c. The SGW 164 may perform other functions, such as anchoring user planes during inter-eNode B handovers, triggering paging when DL data is available for the WTRUs 102a, 102b, 102c, managing and storing contexts of the WTRUs 102a, 102b, 102c, and the like.

The SGW 164 may be connected to the PGW 166, which may provide the WTRUs 102a, 102b, 102c with access to packet-switched networks, such as the Internet 110, to facilitate communications between the WTRUs 102a, 102b, 102c and IP-enabled devices.

The CN 106 may facilitate communications with other networks. For example, the CN 106 may provide the WTRUs 102a, 102b, 102c with access to circuit-switched networks, such as the PSTN 108, to facilitate communications between the WTRUs 102a, 102b, 102c and traditional land-line communications devices. For example, the CN 106 may include, or may communicate with, an IP gateway (e.g., an IP multimedia subsystem (IMS) server) that serves as an interface between the CN 106 and the PSTN 108. In addition, the CN 106 may provide the WTRUs 102a, 102b, 102c with access to the other networks 112, which may include other wired and/or wireless networks that are owned and/or operated by other service providers.

Although the WTRU is described in FIGS. 1A-1D as a wireless terminal, it is contemplated that in certain representative embodiments that such a terminal may use (e.g., temporarily or permanently) wired communication interfaces with the communication network.

In representative embodiments, the other network 112 may be a WLAN.

A WLAN in Infrastructure Basic Service Set (BSS) mode may have an Access Point (AP) for the BSS and one or more stations (STAs) associated with the AP. The AP may have an access or an interface to a Distribution System (DS) or another type of wired/wireless network that carries traffic in to and/or out of the BSS. Traffic to STAs that originates from outside the BSS may arrive through the AP and may be delivered to the STAs. Traffic originating from STAs to destinations outside the BSS may be sent to the AP to be delivered to respective destinations. Traffic between STAs within the BSS may be sent through the AP, for example, where the source STA may send traffic to the AP and the AP may deliver the traffic to the destination STA. The traffic between STAs within a BSS may be considered and/or referred to as peer-to-peer traffic. The peer-to-peer traffic may be sent between (e.g., directly between) the source and destination STAs with a direct link setup (DLS). In certain representative embodiments, the DLS may use an 802.11e DLS or an 802.11z tunneled DLS (TDLS). A WLAN using an Independent BSS (IBSS) mode may not have an AP, and the STAs (e.g., all of the STAs) within or using the IBSS may communicate directly with each other. The IBSS mode of communication may sometimes be referred to herein as an "ad-hoc" mode of communication.

When using the 802.11ac infrastructure mode of operation or a similar mode of operations, the AP may transmit a beacon on a fixed channel, such as a primary channel. The primary channel may be a fixed width (e.g., 20 MHz wide bandwidth) or a dynamically set width via signaling. The primary channel may be the operating channel of the BSS and may be used by the STAs to establish a connection with the AP. In certain representative embodiments, Carrier Sense Multiple Access with Collision Avoidance (CSMA/CA) may be implemented, for example in in 802.11 systems. For CSMA/CA, the STAs (e.g., every STA), including the AP, may sense the primary channel. If the primary channel is sensed/detected and/or determined to be busy by a particular STA, the particular STA may back off. One STA (e.g., only one station) may transmit at any given time in a given BSS.

High Throughput (HT) STAs may use a 40 MHz wide channel for communication, for example, via a combination of the primary 20 MHz channel with an adjacent or nonadjacent 20 MHz channel to form a 40 MHz wide channel.

Very High Throughput (VHT) STAs may support 20MHz, 40 MHz, 80 MHz, and/or 160 MHz wide channels. The 40 MHz, and/or 80 MHz, channels may be formed by combining contiguous 20 MHz channels. A 160 MHz channel may be formed by combining 8 contiguous 20 MHz channels, or by combining two non-contiguous 80 MHz channels, which may be referred to as an 80+80 configuration. For the 80+80 configuration, the data, after channel encoding, may be passed through a segment parser that may divide the data into two streams. Inverse Fast Fourier Transform (IFFT) processing, and time domain processing, may be done on each stream separately. The streams may be mapped on to the two 80 MHz channels, and the data may be transmitted by a transmitting STA. At the receiver of the receiving STA, the above described operation for the 80+80 configuration may be reversed, and the combined data may be sent to the Medium Access Control (MAC).

Sub 1 GHz modes of operation are supported by 802.11 af and 802.11 ah. The channel operating bandwidths, and carriers, are reduced in 802.11af and 802.11 ah relative to those used in 802.11n, and 802.11ac. 802.11af supports 5 MHz, 10 MHz and 20 MHz bandwidths in the TV White Space (TVWS) spectrum, and 802.11 ah supports 1 MHz, 2 MHz, 4 MHz, 8 MHz, and 16 MHz bandwidths using non-TVWS spectrum. According to a representative embodiment, 802.11ah may support Meter Type Control/Machine-Type Communications, such as MTC devices in a macro coverage area. MTC devices may have certain capabilities, for example, limited capabilities including support for (e.g., only support for) certain and/or limited bandwidths. The MTC devices may include a battery with a battery life above a threshold (e.g., to maintain a very long battery life).

WLAN systems, which may support multiple channels, and channel bandwidths, such as 802.11n, 802.11ac, 802.11af, and 802.11ah, include a channel which may be designated as the primary channel. The primary channel may have a bandwidth equal to the largest common operating bandwidth supported by all STAs in the BSS. The bandwidth of the primary channel may be set and/or limited by a STA, from among all STAs in operating in a BSS, which supports the smallest bandwidth operating mode. In the example of 802.11ah, the primary channel may be 1 MHz wide for STAs (e.g., MTC type devices) that support (e.g., only support) a 1 MHz mode, even if the AP, and other STAs in the BSS support 2 MHz, 4 MHz, 8 MHz, 16 MHz, and/or other channel bandwidth operating modes. Carrier sensing and/or Network Allocation Vector (NAV) settings may depend on the status of the primary channel. If the primary channel is busy, for example, due to a STA (which supports only a 1 MHz operating mode), transmitting to the AP, the entire available frequency bands may be considered busy even though a majority of the frequency bands remains idle and may be available.

In the United States, the available frequency bands, which may be used by 802.11ah, are from 902 MHz to 928 MHz. In Korea, the available frequency bands are from 917.5 MHz to 923.5 MHz. In Japan, the available frequency bands are from 916.5 MHz to 927.5 MHz. The total bandwidth available for 802.11ah is 6 MHz to 26 MHz depending on the country code.

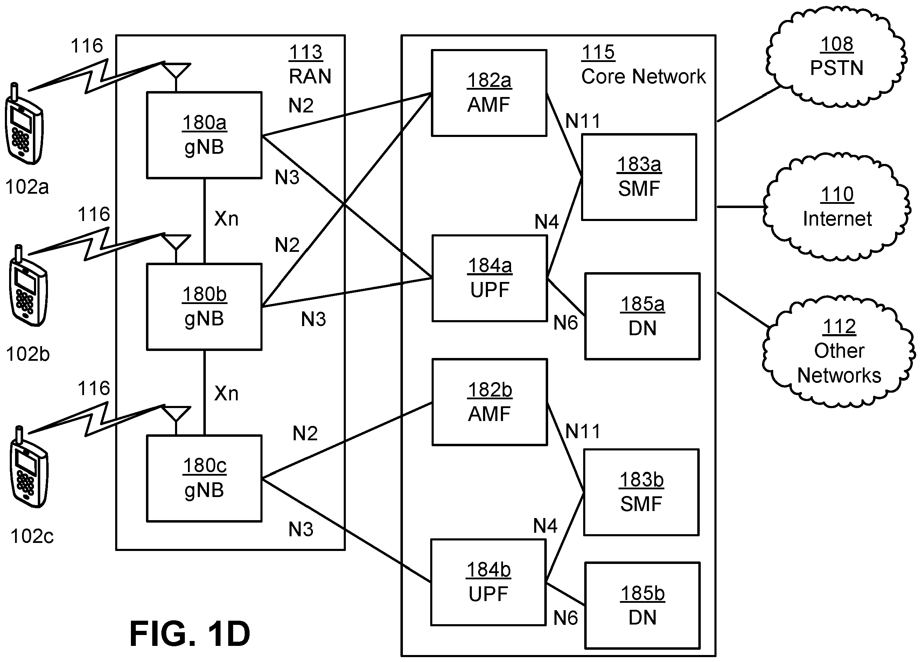

FIG. 1D is a system diagram illustrating the RAN 113 and the CN 115 according to an embodiment. As noted above, the RAN 113 may employ an NR radio technology to communicate with the WTRUs 102a, 102b, 102c over the air interface 116. The RAN 113 may also be in communication with the CN 115.

The RAN 113 may include gNBs 180a, 180b, 180c, though it will be appreciated that the RAN 113 may include any number of gNBs while remaining consistent with an embodiment. The gNBs 180a, 180b, 180c may each include one or more transceivers for communicating with the WTRUs 102a, 102b, 102c over the air interface 116. In one embodiment, the gNBs 180a, 180b, 180c may implement MIMO technology. For example, gNBs 180a, 108b may utilize beamforming to transmit signals to and/or receive signals from the gNBs 180a, 180b, 180c. Thus, the gNB 180a, for example, may use multiple antennas to transmit wireless signals to, and/or receive wireless signals from, the WTRU 102a. In an embodiment, the gNBs 180a, 180b, 180c may implement carrier aggregation technology. For example, the gNB 180a may transmit multiple component carriers to the WTRU 102a (not shown). A subset of these component carriers may be on unlicensed spectrum while the remaining component carriers may be on licensed spectrum. In an embodiment, the gNBs 180a, 180b, 180c may implement Coordinated Multi-Point (CoMP) technology. For example, WTRU 102a may receive coordinated transmissions from gNB 180a and gNB 180b (and/or gNB 180c).

The WTRUs 102a, 102b, 102c may communicate with gNBs 180a, 180b, 180c using transmissions associated with a scalable numerology. For example, the OFDM symbol spacing and/or OFDM subcarrier spacing may vary for different transmissions, different cells, and/or different portions of the wireless transmission spectrum. The WTRUs 102a, 102b, 102c may communicate with gNBs 180a, 180b, 180c using subframe or transmission time intervals (TTIs) of various or scalable lengths (e.g., containing varying number of OFDM symbols and/or lasting varying lengths of absolute time).

The gNBs 180a, 180b, 180c may be configured to communicate with the WTRUs 102a, 102b, 102c in a standalone configuration and/or a non-standalone configuration. In the standalone configuration, WTRUs 102a, 102b, 102c may communicate with gNBs 180a, 180b, 180c without also accessing other RANs (e.g., such as eNode-Bs 160a, 160b, 160c). In the standalone configuration, WTRUs 102a, 102b, 102c may utilize one or more of gNBs 180a, 180b, 180c as a mobility anchor point. In the standalone configuration, WTRUs 102a, 102b, 102c may communicate with gNBs 180a, 180b, 180c using signals in an unlicensed band. In a non-standalone configuration WTRUs 102a, 102b, 102c may communicate with/connect to gNBs 180a, 180b, 180c while also communicating with/connecting to another RAN such as eNode-Bs 160a, 160b, 160c. For example, WTRUs 102a, 102b, 102c may implement DC principles to communicate with one or more gNBs 180a, 180b, 180c and one or more eNode-Bs 160a, 160b, 160c substantially simultaneously. In the non-standalone configuration, eNode-Bs 160a, 160b, 160c may serve as a mobility anchor for WTRUs 102a, 102b, 102c and gNBs 180a, 180b, 180c may provide additional coverage and/or throughput for servicing WTRUs 102a, 102b, 102c.

Each of the gNBs 180a, 180b, 180c may be associated with a particular cell (not shown) and may be configured to handle radio resource management decisions, handover decisions, scheduling of users in the UL and/or DL, support of network slicing, dual connectivity, interworking between NR and E-UTRA, routing of user plane data towards User Plane Function (UPF) 184a, 184b, routing of control plane information towards Access and Mobility Management Function (AMF) 182a, 182b and the like. As shown in FIG. 1D, the gNBs 180a, 180b, 180c may communicate with one another over an Xn interface.

The CN 115 shown in FIG. 1D may include at least one AMF 182a, 182b, at least one UPF 184a,184b, at least one Session Management Function (SMF) 183a, 183b, and possibly a Data Network (DN) 185a, 185b. While each of the foregoing elements are depicted as part of the CN 115, it will be appreciated that any of these elements may be owned and/or operated by an entity other than the CN operator.

The AMF 182a, 182b may be connected to one or more of the gNBs 180a, 180b, 180c in the RAN 113 via an N2 interface and may serve as a control node. For example, the AMF 182a, 182b may be responsible for authenticating users of the WTRUs 102a, 102b, 102c, support for network slicing (e.g., handling of different PDU sessions with different requirements), selecting a particular SMF 183a, 183b, management of the registration area, termination of NAS signaling, mobility management, and the like. Network slicing may be used by the AMF 182a, 182b in order to customize CN support for WTRUs 102a, 102b, 102c based on the types of services being utilized WTRUs 102a, 102b, 102c. For example, different network slices may be established for different use cases such as services relying on ultra-reliable low latency (URLLC) access, services relying on enhanced massive mobile broadband (eMBB) access, services for machine type communication (MTC) access, and/or the like. The AMF 162 may provide a control plane function for switching between the RAN 113 and other RANs (not shown) that employ other radio technologies, such as LTE, LTE-A, LTE-A Pro, and/or non-3GPP access technologies such as WiFi.

The SMF 183a, 183b may be connected to an AMF 182a, 182b in the CN 115 via an N11 interface. The SMF 183a, 183b may also be connected to a UPF 184a, 184b in the CN 115 via an N4 interface. The SMF 183a, 183b may select and control the UPF 184a, 184b and configure the routing of traffic through the UPF 184a, 184b. The SMF 183a, 183b may perform other functions, such as managing and allocating WTRU IP address, managing PDU sessions, controlling policy enforcement and QoS, providing downlink data notifications, and the like. A PDU session type may be IP-based, non-IP based, Ethernet-based, and the like.

The UPF 184a, 184b may be connected to one or more of the gNBs 180a, 180b, 180c in the RAN 113 via an N3 interface, which may provide the WTRUs 102a, 102b, 102c with access to packet-switched networks, such as the Internet 110, to facilitate communications between the WTRUs 102a, 102b, 102c and IP-enabled devices. The UPF 184, 184b may perform other functions, such as routing and forwarding packets, enforcing user plane policies, supporting multi-homed PDU sessions, handling user plane QoS, buffering downlink packets, providing mobility anchoring, and the like.

The CN 115 may facilitate communications with other networks. For example, the CN 115 may include, or may communicate with, an IP gateway (e.g., an IP multimedia subsystem (IMS) server) that serves as an interface between the CN 115 and the PSTN 108. In addition, the CN 115 may provide the WTRUs 102a, 102b, 102c with access to the other networks 112, which may include other wired and/or wireless networks that are owned and/or operated by other service providers. In one embodiment, the WTRUs 102a, 102b, 102c may be connected to a local Data Network (DN) 185a, 185b through the UPF 184a, 184b via the N3 interface to the UPF 184a, 184b, and an N6 interface between the UPF 184a, 184b and the DN 185a, 185b.

In view of Figures 1A-1D, and the corresponding description of Figures 1A-1D, one or more, or all, of the functions described herein with regard to one or more of: WTRU 102a-d, Base Station 114a-b, eNode-B 160a-c, MME 162, SGW 164, PGW 166, gNB 180a-c, AMF 182a-b, UPF 184a-b, SMF 183a-b, DN 185a-b, and/or any other device(s) described herein, may be performed by one or more emulation devices (not shown). The emulation devices may be one or more devices configured to emulate one or more, or all, of the functions described herein. For example, the emulation devices may be used to test other devices and/or to simulate network and/or WTRU functions.

The emulation devices may be designed to implement one or more tests of other devices in a lab environment and/or in an operator network environment. For example, the one or more emulation devices may perform the one or more, or all, functions while being fully or partially implemented and/or deployed as part of a wired and/or wireless communication network in order to test other devices within the communication network. The one or more emulation devices may perform the one or more, or all, functions while being temporarily implemented/deployed as part of a wired and/or wireless communication network. The emulation device may be directly coupled to another device for purposes of testing and/or may performing testing using over-the-air wireless communications.

The one or more emulation devices may perform the one or more, including all, functions while not being implemented/deployed as part of a wired and/or wireless communication network. For example, the emulation devices may be utilized in a testing scenario in a testing laboratory and/or a non-deployed (e.g., testing) wired and/or wireless communication network in order to implement testing of one or more components. The one or more emulation devices may be test equipment. Direct RF coupling and/or wireless communications via RF circuitry (e.g., which may include one or more antennas) may be used by the emulation devices to transmit and/or receive data.

This application describes a variety of aspects, including tools, features, examples or embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects may be combined and interchanged to provide further aspects. Moreover, the aspects may be combined and interchanged with aspects described in earlier filings as well.

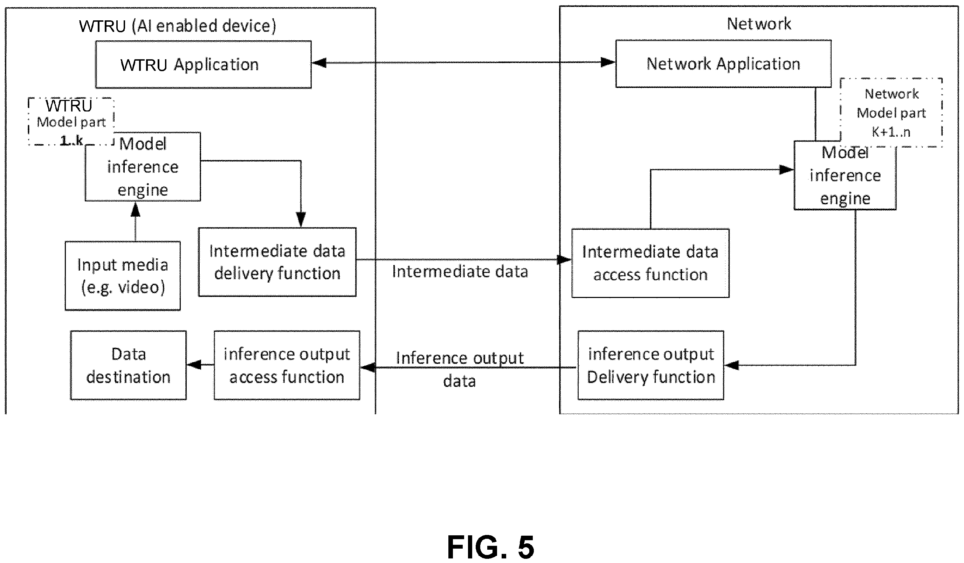

The aspects described and contemplated in this application may be implemented in many different forms. FIGS. 5-7 described herein may provide some embodiments, but other embodiments are contemplated. The discussion of FIGS. 5-7 does not limit the breadth of the implementations. At least one of the aspects generally relates to video encoding and decoding, and at least one other aspect generally relates to transmitting a bitstream generated or encoded. These and other aspects may be implemented as a method, an apparatus, a computer readable storage medium having stored thereon instructions for encoding or decoding video data according to any of the methods described, and/or a computer readable storage medium having stored thereon a bitstream generated according to any of the methods described.

In the present application, the terms "reconstructed" and "decoded" may be used interchangeably, the terms "pixel" and "sample" may be used interchangeably, the terms "image," "picture" and "frame" may be used interchangeably.

Various methods are described herein, and each of the methods comprises one or more steps or actions for achieving the described method. Unless a specific order of steps or actions is required for proper operation of the method, the order and/or use of specific steps and/or actions may be modified or combined. Additionally, terms such as "first", "second", etc. may be used in various embodiments to modify an element, component, step, operation, etc., such as, for example, a "first decoding" and a "second decoding". Use of such terms does not imply an ordering to the modified operations unless specifically required. So, in this example, the first decoding need not be performed before the second decoding, and may occur, for example, before, during, or in an overlapping time period with the second decoding.

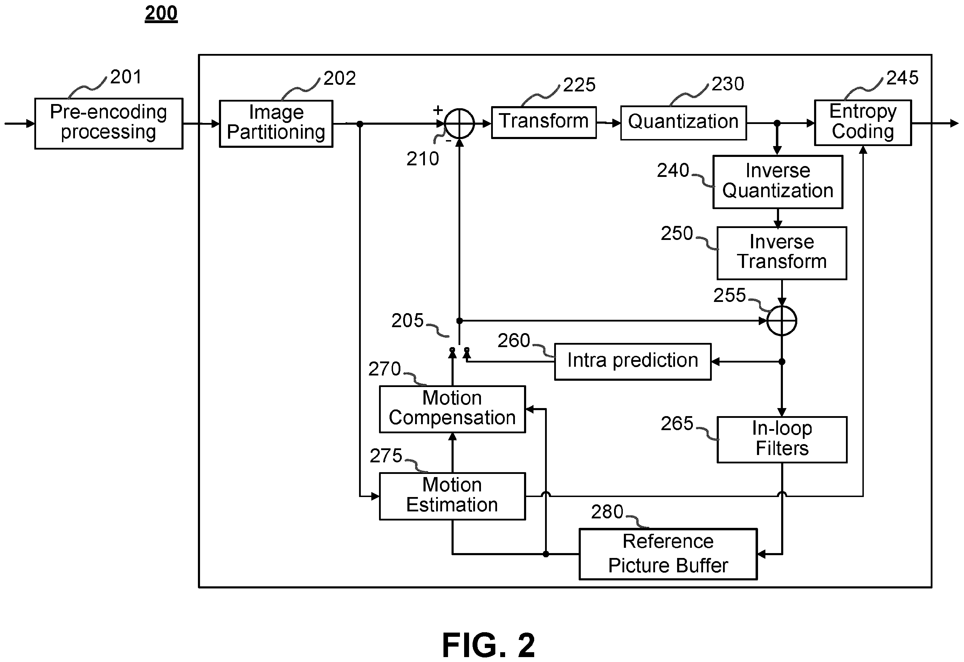

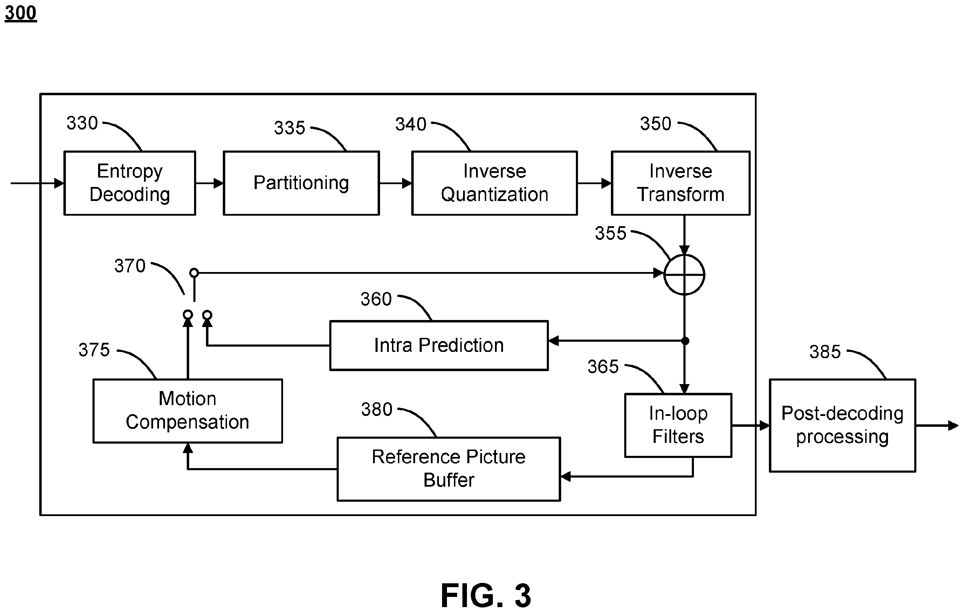

Various methods and other aspects described in this application may (for example, be used to) modify modules, for example, pre-encoding processing 201, intra prediction 260, entropy coding 245 and/or entropy decoding modules 330, intra prediction 360, post-decoding processing 385, of a video encoder 200 and a video decoder 300 as shown in FIG. 2 and FIG. 3 respectively. Moreover, the subject matter disclosed herein presents aspects that are not limited to VVC or HEVC, and may be applied, for example, to any type, format or version of video coding, whether described in a standard or a recommendation, whether pre-existing or future-developed, and extensions of any such standards and recommendations (e.g., including VVC and HEVC). Unless indicated otherwise, or technically precluded, the aspects described in this application may be used individually or in combination.

Various numeric values are used in examples described the present application, such as minimum and maximum value ranges (for example, 0 to 1, 0 to N or 0 to 255), bit values for indications or determinations, default values, ID numbers (for example, for adaptation IDs), etc. These and other specific values are for purposes of describing examples and the aspects described are not limited to these specific values.

FIG. 2 is a diagram showing an example video encoder. Variations of example encoder 200 are contemplated, but the encoder 200 is described below for purposes of clarity without describing all expected variations.

Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the preprocessing, and attached to the bitstream.

In the encoder 200, a picture is encoded by the encoder elements as described below. The picture to be encoded is partitioned (202) and processed in units of, for example, coding units (CUs). Each unit is encoded using, for example, either an intra or inter mode. When a unit is encoded in an intra mode, it performs intra prediction (260). In an inter mode, motion estimation (275) and compensation (270) are performed. The encoder decides (205) which one of the intra mode or inter mode to use for encoding the unit, and indicates the intra/inter decision by, for example, a prediction mode flag. Prediction residuals are calculated, for example, by subtracting (210) the predicted block from the original image block.

The prediction residuals are then transformed (225) and quantized (230). The quantized transform coefficients, as well as motion vectors and other syntax elements, are entropy coded (245) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions. The quantized transform coefficients are de-quantized (240) and inverse transformed (250) to decode prediction residuals. Combining (255) the decoded prediction residuals and the predicted block, an image block is reconstructed. In-loop filters (265) are applied to the reconstructed picture to perform, for example, deblocking/SAO (Sample Adaptive Offset) filtering to reduce encoding artifacts. The filtered image is stored at a reference picture buffer (280).

FIG. 3 is a diagram showing an example of a video decoder. In example decoder 300, a bitstream is decoded by the decoder elements as described below. Video decoder 300 generally performs a decoding pass reciprocal to the encoding pass as described in FIG. 2. The encoder 200 may also generally perform video decoding as part of encoding video data. For example, the encoder 200 may perform one or more of the video decoding steps presented herein. The encoder reconstructs the decoded images, for example, to maintain synchronization with the decoder with respect to one or more of the following: reference pictures, entropy coding contexts, and other decoder-relevant state variables.

In particular, the input of the decoder includes a video bitstream, which may be generated by video encoder 200. The bitstream is first entropy decoded (330) to obtain transform coefficients, motion vectors, and other coded information. The picture partition information indicates how the picture is partitioned. The decoder may therefore divide (335) the picture according to the decoded picture partitioning information. The transform coefficients are de-quantized (340) and inverse transformed (350) to decode the prediction residuals. Combining (355) the decoded prediction residuals and the predicted block, an image block is reconstructed. The predicted block may be obtained (370) from intra prediction (360) or motion-compensated prediction (i.e., inter prediction) (375). In-loop filters (365) are applied to the reconstructed image. The filtered image is stored at a reference picture buffer (380).

The decoded picture can further go through post-decoding processing (385), for example, an inverse color transform (e.g. conversion from YCbCr 4:2:0 to RGB 4:4:4) or an inverse remapping performing the inverse of the remapping process performed in the pre-encoding processing (201). The post-decoding processing can use metadata derived in the pre-encoding processing and signaled in the bitstream.

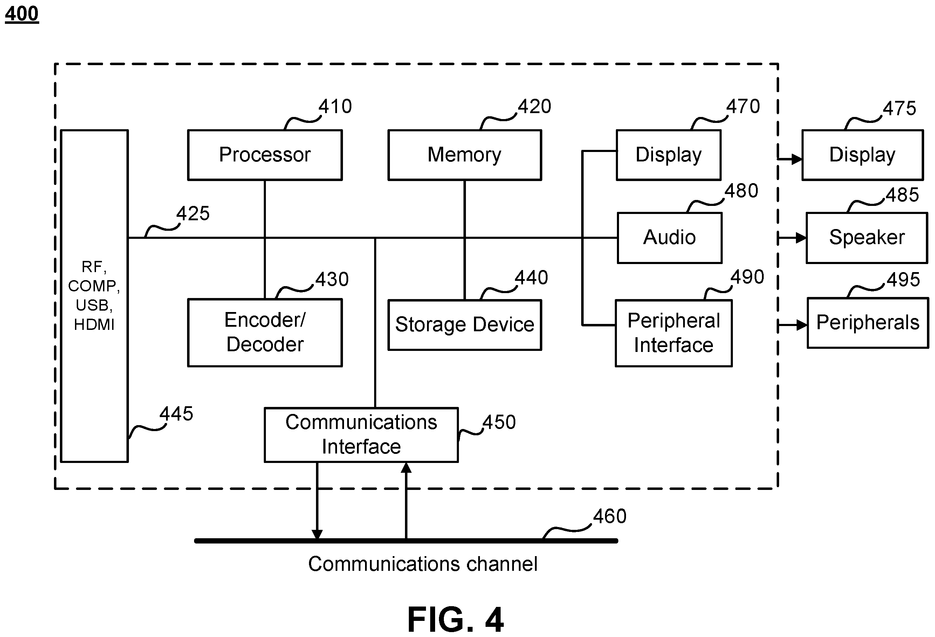

FIG. 4 is a diagram showing an example of a system in which various aspects and embodiments described herein may be implemented. System 400 may be embodied as a device including the various components described below and is configured to perform one or more of the aspects described in this document. Examples of such devices include, but are not limited to, various electronic devices such as personal computers, laptop computers, smartphones, tablet computers, digital multimedia set top boxes, digital television receivers, personal video recording systems, connected home appliances, and servers. Elements of system 400, singly or in combination, may be embodied in a single integrated circuit (IC), multiple ICs, and/or discrete components. For example, in at least one example, the processing and encoder/decoder elements of system 400 are distributed across multiple ICs and/or discrete components. In various embodiments, the system 400 is communicatively coupled to one or more other systems, or other electronic devices, via, for example, a communications bus or through dedicated input and/or output ports. In various embodiments, the system 400 is configured to implement one or more of the aspects described in this document.

The system 400 includes at least one processor 410 configured to execute instructions loaded therein for implementing, for example, the various aspects described in this document. Processor 410 can include embedded memory, input output interface, and various other circuitries as known in the art. The system 400 includes at least one memory 420 (e.g., a volatile memory device, and/or a non-volatile memory device). System 400 includes a storage device 440, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 440 can include an internal storage device, an attached storage device (including detachable and non-detachable storage devices), and/or a network accessible storage device, as non-limiting examples.

System 400 includes an encoder/decoder module 430 configured, for example, to process data to provide an encoded video or decoded video, and the encoder/decoder module 430 can include its own processor and memory. The encoder/decoder module 430 represents module(s) that may be included in a device to perform the encoding and/or decoding functions. As is known, a device can include one or both of the encoding and decoding modules. Additionally, encoder/decoder module 430 may be implemented as a separate element of system 400 or may be incorporated within processor 410 as a combination of hardware and software as known to those skilled in the art.

Program code to be loaded onto processor 410 or encoder/decoder 430 to perform the various aspects described in this document may be stored in storage device 440 and subsequently loaded onto memory 420 for execution by processor 410. In accordance with various embodiments, one or more of processor 410, memory 420, storage device 440, and encoder/decoder module 430 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 410 and/or the encoder/decoder module 430 is used to store instructions and to provide working memory for processing that is needed during encoding or decoding. In other embodiments, however, a memory external to the processing device (for example, the processing device may be either the processor 410 or the encoder/decoder module 430) is used for one or more of these functions. The external memory may be the memory 420 and/or the storage device 440, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as, for example, MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 400 may be provided through various input devices as indicated in block 445. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 4, include composite video.

In various embodiments, the input devices of block 445 have associated respective input processing elements as known in the art. For example, the RF portion may be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which may be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 400 to other electronic devices across USB and/or HDMI connections. It is to be understood that various aspects of input processing, for example, Reed-Solomon error correction, may be implemented, for example, within a separate input processing IC or within processor 410 as necessary. Similarly, aspects of USB or HDMI interface processing may be implemented within separate interface ICs or within processor 410 as necessary. The demodulated, error corrected, and demultiplexed stream is provided to various processing elements, including, for example, processor 410, and encoder/decoder 430 operating in combination with the memory and storage elements to process the data stream as necessary for presentation on an output device.

Various elements of system 400 may be provided within an integrated housing. Within the integrated housing, the various elements may be interconnected and transmit data therebetween using suitable connection arrangement 425, for example, an internal bus as known in the art, including the Inter-IC (I2C) bus, wiring, and printed circuit boards.

The system 400 includes communication interface 450 that enables communication with other devices via communication channel 460. The communication interface 450 can include, but is not limited to, a transceiver configured to transmit and to receive data over communication channel 460. The communication interface 450 can include, but is not limited to, a modem or network card and the communication channel 460 may be implemented, for example, within a wired and/or a wireless medium.

Data is streamed, or otherwise provided, to the system 400, in various embodiments, using a wireless network such as a Wi-Fi network, for example IEEE 802.11 (IEEE refers to the Institute of Electrical and Electronics Engineers). The Wi-Fi signal of these examples is received over the communications channel 460 and the communications interface 450 which are adapted for Wi-Fi communications. The communications channel 460 of these embodiments is typically connected to an access point or router that provides access to external networks including the Internet for allowing streaming applications and other over-the-top communications. Other embodiments provide streamed data to the system 400 using a set-top box that delivers the data over the HDMI connection of the input block 445. Still other embodiments provide streamed data to the system 400 using the RF connection of the input block 445. As indicated above, various embodiments provide data in a non-streaming manner. Additionally, various embodiments use wireless networks other than Wi-Fi, for example a cellular network or a Bluetooth network.

The system 400 can provide an output signal to various output devices, including a display 475, speakers 485, and other peripheral devices 495. The display 475 of various embodiments includes one or more of, for example, a touchscreen display, an organic light-emitting diode (OLED) display, a curved display, and/or a foldable display. The display 475 may be for a television, a tablet, a laptop, a cell phone (mobile phone), or other device. The display 475 can also be integrated with other components (for example, as in a smart phone), or separate (for example, an external monitor for a laptop). The other peripheral devices 495 include, in various examples of embodiments, one or more of a stand-alone digital video disc (or digital versatile disc) (DVR, for both terms), a disk player, a stereo system, and/or a lighting system. Various embodiments use one or more peripheral devices 495 that provide a function based on the output of the system 400. For example, a disk player performs the function of playing the output of the system 400.

In various embodiments, control signals are communicated between the system 400 and the display 475, speakers 485, or other peripheral devices 495 using signaling such as AV.Link, Consumer Electronics Control (CEC), or other communications protocols that enable device-to-device control with or without user intervention. The output devices may be communicatively coupled to system 400 via dedicated connections through respective interfaces 470, 480, and 490. Alternatively, the output devices may be connected to system 400 using the communications channel 460 via the communications interface 450. The display 475 and speakers 485 may be integrated in a single unit with the other components of system 400 in an electronic device such as, for example, a television. In various embodiments, the display interface 470 includes a display driver, such as, for example, a timing controller (T Con) chip.

The display 475 and speakers 485 can alternatively be separate from one or more of the other components, for example, if the RF portion of input 445 is part of a separate set-top box. In various embodiments in which the display 475 and speakers 485 are external components, the output signal may be provided via dedicated output connections, including, for example, HDMI ports, USB ports, or COMP outputs.

The embodiments may be carried out by computer software implemented by the processor 410 or by hardware, or by a combination of hardware and software. As a non-limiting example, the embodiments may be implemented by one or more integrated circuits. The memory 420 may be of any type appropriate to the technical environment and may be implemented using any appropriate data storage technology, such as optical memory devices, magnetic memory devices, semiconductor-based memory devices, fixed memory, and removable memory, as non-limiting examples. The processor 410 may be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application.

As further embodiments, in one example "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that syntax elements as used herein, such as syntax elements that may be indicated in discussion or figures presented herein, are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

During the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein may be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus may be implemented in, for example, appropriate hardware, software, and firmware. The methods may be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment," "an embodiment," "an example," "one implementation" or "an implementation," as well as other variations thereof, means that a particular feature, structure, characteristic, and so forth described in connection with the embodiment is included in at least one embodiment. Thus, the appearances of the phrase "in one embodiment," "in an embodiment," "in an example," "in one implementation," or "in an implementation", as well any other variations, appearing in various places throughout this application are not necessarily all referring to the same embodiment or example.

Additionally, this application may refer to "determining" various pieces of information. Determining the information can include one or more of, for example, estimating the information, calculating the information, predicting the information, or retrieving the information from memory. Obtaining may include receiving, retrieving, constructing, generating, and/or determining.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, signaling may be used without transmitting (implicit signaling) to simply allow the decoder to know and select the particular parameter. By avoiding transmission of any actual functions, a bit savings is realized in various embodiments. It is to be appreciated that signaling may be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations may produce a variety of signals formatted to carry information that may be, for example, stored or transmitted. The information can include, for example, instructions for performing a method, or data produced by one of the described implementations. For example, a signal may be formatted to carry the bitstream of a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

Systems, methods, and instrumentalities are disclosed associated with tensor-based compression profile(s) for split point configuration(s). Compression profile(s) may be selected for a (e.g., each) tensor for a candidate split point configuration to negotiate. Compression profiles may apply to intermediate data tensors to fulfil an application task (e.g., data processing task). The compression profiles may be negotiated between endpoints. Endpoints may determine a compression scheme to apply to a tensor based on a negotiated split point configuration. The determined compression scheme may be applied to a tensor. Data may be sent (e.g., via a bitstream) between endpoints. The data may include a compressed tensor and/or split point information.

A device may perform tensor-based compression for split point configurations. For example, a media encoding device may perform tensor-based compression for split point configurations. For example, a media decoding device may perform tensor-based compression for split point configurations. The device may obtain an intermediate data tensor. The intermediate data tensor may be associated with intermediate data of a data processing model. The data processing model may be an artificial intelligence (AI) processing model. The device may determine (e.g., for the intermediate data tensor) a performance threshold associated with a data processing task to be performed by the device. The data processing task may include an AI task. The performance threshold may indicate a minimum performance for performing the AI task. The device may determine a tensor characteristic of the intermediate data tensor. The tensor characteristic may include a data size, a tensor name, a tensor type, a tensor shape and/or the like. The device may determine the Neural network layer where the intermediate data tensor originates and the Neural layer where the intermediate data tensor is input. The device may determine a compression profile associated with the intermediate data tensor. The device may determine a compression profile associated with the intermediate data tensor, for example, based on the performance threshold associated with the data processing tasks to be performed by the device, the tensor characteristic of the intermediate data tensor, and/or a performance metric associated with the compression profile. The device may determine the impact on the performance metric of applying compression profiles to intermediate data tensors which may vary depending on to the characteristic of the neural network, such as the deep neural network types (Multi-Layer Perceptrons (MLP), Convolutionnal Neural Networks (CNN), Recurrent Neural network (RNN) and/or the like, the network layer type of the input tensors (convolution, activation, full connected, pooling, batch normalization and/or the like).The performance metric associated with the compression profile may include a performance score associated with the compression profile. The minimum performance for performing the AI task may include a minimum accuracy or a maximum latency (e.g., required) for performing the data processing task. The device may send (e.g., via a control plane) an indication of an association of the compression profile with the intermediate data tensor. The device may generate a compressed intermediate data tensor, for example, based on the intermediate data tensor and/or the compression profile associated with the intermediate data tensor. The device may send the compressed intermediate data tensor to a media decoding device (e.g., different media decoding device). The device may include (e.g., in a header of an intermediate data packer) one or more indications associated with a split point profile. The one or more indications may include a data compression indication and/or a tensor identifier for the intermediate data tensor. The data compression indication may indicate whether intermediate data represented by the intermediate data tensor is compressed. The one or more indications associated with the split point profile may further include an indication of a presence or absence of a split point identifier, a number of tensor elements associated with the intermediate data tensor, a length of the intermediate data tensor, a tensor array list associated with a bitstream (e.g., via which the intermediate data may be sent), a tensor bitstream data, and/or the like.

In examples, the device may determine an available bandwidth for a downlink (DL) or uplink (UL) transmission associated with the device and/or an amount of data to be transmitted via the DL or UL transmission. The compression profile associated with the intermediate data tensor may be determined further based on the available bandwidth for the DL or UL transmission and/or the amount of data to be transmitted via the DL or UL transmission. For example, the intermediate data tensor may be compressed more, for example, if the bandwidth available is less than a threshold. Otherwise, the intermediate data tensor may be compressed less, for example, if the bandwidth available is greater than or equal to a threshold.

In examples, the device may determine a processing capability associated with the device and/or a processing capability associated with a media decoding device. The compression profile associated with the intermediate data tensor may be determined further based on the processing capability associated with the device and/or the processing capability associated with the media decoding device. For example, the intermediate data tensor may be compressed more, for example, if computing resources/memory is low (e.g., below a threshold). Otherwise, the intermediate data tensor may be compressed less (e.g., if computing resources/memory is not low (e.g., greater than or equal to a threshold)).

In examples, the device may determine compression profiles available on other endpoints. Different endpoints may implement different compression scheme or profile, depending on the processing capabilities, on the operating system in used, on the user's or application provider choice to enable compression profile on endpoints.

A device (e.g., media decoding device) may obtain (e.g., via a control plane) an indication of an association of a compression profile with an intermediate data tensor. The device may receive an intermediate data tensor identifier, for example, in a split point profile of a data processing model. The device may obtain the intermediate data tensor. The device may determine that the split point profile is applicable to the intermediate data tensor, for example, based on the intermediate data tensor identifier. The device may generate a decompressed intermediate data tensor, for example, based on the split point profile and/or the association of the compression profile with the intermediate data tensor. The device may determine an output of the data processing model, for example, based on the decompressed intermediate data tensor. The device may send the output of the data processing model. For example, the device may receive (e.g., via a header of an intermediate data packet) one or more indications associated with the split point profile. The one or more indications may include the intermediate data tensor identifier and/or data compression indication. The data compression indication may indicate whether intermediate data represented by the intermediate data tensor is compressed. The one or more indications associated with the split point profile may further include an indication of a presence or absence of a split point identifier, a number of tensor elements associated with the intermediate data tensor, a length of the intermediate data tensor, a tensor array list associated with a bitstream (e.g., via which the intermediate data tensor may be sent), tensor bitstream data, and/or the like.

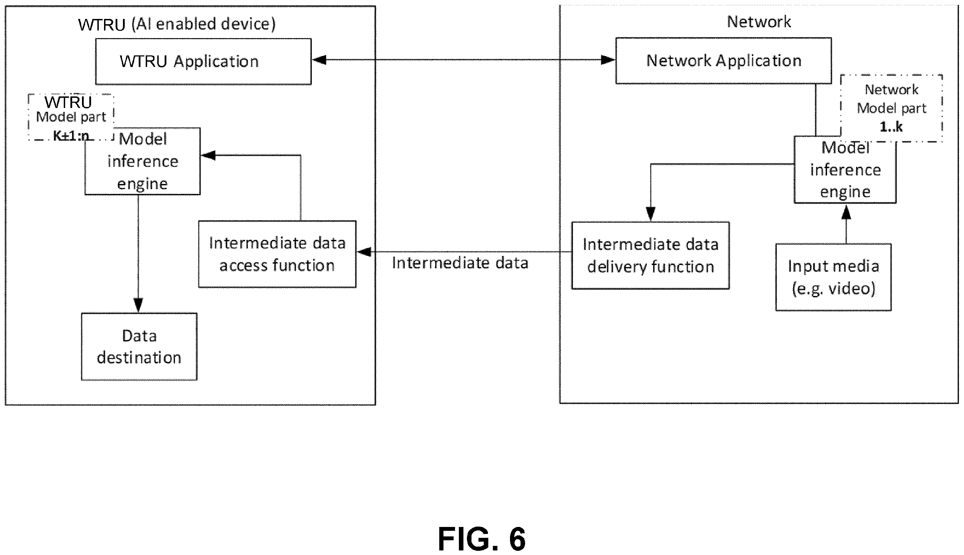

FIG. 5 illustrates an example of split inference between a WTRU and the network with a media data source in the WTRU. FIG. 6 illustrates an example split inference between a WTRU and the network with a media data source in the network. FIGs. 5 and 6 illustrate example architectures for split inferences of a model composed of n layers (1..n) between the network and a WTRU, for example, where a first inference may process a first part of the model (e.g., e.g., layers 1..k), and the second inference may process the second part of the model (e.g., layers k+1..n). The architecture may show the delivery and access functions of intermediate data between the WTRU and the network, for example, for the one or more of the following scenarios: if the media data source originates from the WTRU, the first part of the inference may be performed in the WTRU and the second part of the inference may be performed in a network device associated with a network (e.g., where the resulting output data may be sent back to the WTRU); or if the media data source originates from the network device or from the network via the WTRU, the first part of the AI model may be performed on the network side and the second part of the AI model may be performed on the WTRU.

The Intermediate data delivery function (e.g., among the different functions) may apply a serialization technique to encode the intermediate data output. An Intermediate data access function may apply the corresponding deserialization technique to get the intermediate data. A binary serialization may transform a data structure into a series of bytes for the intermediate data.

The intermediate data resulting from the first part of the model (e.g., coming from the WTRU or the network) may include multi-dimensional arrays or tensor(s). The transmitted tensor(s) may feed a second inference (e.g., taking place in the Network or the WTRU on another device).

Details associated with performance metrics may be provided and/or described herein.

There may be a difference between the output result of the model and the real value (e.g., in the process of AI/ML), for example, regardless of the training set or the sample used (e.g., new sample). Model evaluation may include using different evaluation metrics to understand the performance of artificial intelligence/machine learning models and its advantages and disadvantages. Model evaluation may (e.g., be an indispensable part of the model development phases which can) help to discover the appropriate model to express the data and evaluate the performance of the selected model.

Different AI/ML work tasks may have different evaluation metrics, and the same machine learning task may have different evaluation metrics (e.g., each metric may have different emphasis, e.g., classification, regression, ranking, clustering, recommendation, etc.)

Scenarios described herein may involve computer vision tasks for model performance metrics. There may be different metrics depending on the type of task performed by the model.

Classification model evaluation may include assessing and measuring the performance of a machine learning model that has been used for classification tasks. Classification model evaluation may have a goal of dividing different images into different categories, for example, to achieve the minimum classification error.

A confusion matrix may include a table used in classification tasks that may summarize the performance of a machine learning model on a set of data for which the true values are known. The confusion matrix may include rows and columns, for example, where a (e.g., each) row may represent the true class of the samples and a (e.g., each) column may represent the predicted class. The confusion matrix may display the number of samples that are classified correctly (e.g., true positives and true negatives) and incorrectly (e.g., false positives and false negatives) by the model.

Table 1: Example Confusion Matrix

| Confusion Matrix | | Predicted Value | |
|---|---|---|---|
| | | Positive | Negative |
| True Value | Positive | **True Positives (TP)** | **False Negatives (FN)** |
| | Negative | **False Positives (FP)** | **True Negatives (TN)** |

A true positive (TP) may predict an observation belongs to a class and it actually does belong to that class. A true negatives (TN) may predict an observation does not belong to a class and it actually does not belong to that class. A false positives (FP) may predict an observation belongs to a class but it does not belong to that class. A false negatives (FN) may predict an observation does not belong to a class but it does belong to that class.

Metrics may be used to evaluate and/or measure the performance of a classification model (e.g., or object classification tasks). The metrics may include one or more of the following: accuracy, precision, recall, F1 score, and/or the like.

Accuracy may include a metric (e.g., simple metric) for evaluating classification performance. Accuracy may measure the percentage of correctly classified objects out of the total number of objects in the dataset. Accuracy may be easy to understand and compute. Accuracy may be misleading, for example, if the dataset is imbalanced, or the cost of misclassifying different categories is not equal. Accuracy may include measuring how often the classifier makes the correct predictions. Accuracy may include the ratio between the number of correct predictions and the number of total predictions. Accuracy may be calculated, for example, according to Eq. 1.

$$Accuracy = \frac{TP+TN}{TP+TN+FP+FN} \qquad \text{Eq. 1}$$

Precision may include a measure of the proportion of true positives among objects (e.g., all the objects) that the model classified as positive. Precision may be used (e.g., useful) if (e.g., when) the cost of false positives is high, and may be used (e.g., is essential to) avoid misclassifying objects. Precision may include a measure of the proportion of predicted positive results that are actually positive. Precision may include the fraction of examples (e.g., true positives) among examples (e.g., all of the examples) which were predicted to belong in a certain class (e.g., positive). Precision may be calculated, for example, according to Eq. 2.

$$Precision = \frac{TP}{TP+FP} \qquad \text{Eq. 2}$$

Recall may include a measure of the proportion of true positives among objects (e.g., all the objects) that belong to the positive class in the dataset. Recall may be used (e.g., useful) if (e.g., when) the cost of false negatives is high, and may be used (e.g., essential) to detect objects (e.g., all objects) in the dataset. Recall may include a measure of how much the classifier can predict in an actual positive sample. Recall may include the fraction of examples which were predicted to belong to a class with respect to examples (e.g., all of the examples) that truly belong in the class. Recall may be calculated, for example, according to Eq. 3.

$$Recall = \frac{TP}{TP+FN} \qquad \text{Eq. 3}$$

The F1 score may include the harmonic mean of precision and recall. The F1 score may provide a balanced view of the model's performance. F1-score may include a combination of precision and recall, for example, which may provide a balanced measure of the model's ability to find all true positive cases and its ability to avoid false positives. F1 score may be calculated, for example, according to Eq. 4.

$$F1 = \frac{2*Precision*Recall}{Precision+Recall} \qquad \text{Eq. 4}$$

Metrics may be used for object detection tasks. The metrics (e.g., for object detection tasks) may include one or more of the following: Intersection over Union; precision and recall; average precision; F1 score; etc.

Intersection over Union (IoU) may be used for evaluating object detection algorithms. IoU may measure the overlap between the ground truth bounding box and the predicted bounding box. IoU may include the ratio of the intersection of the two boxes to the union of the two boxes. A higher IoU score may indicate better object detection accuracy.

Precision and Recall may be used as metrics for object detection tasks. Precision may include a measure of the fraction of true positives (e.g., correctly identified objects) out of (e.g., all) predicted positives (e.g., objects identified by the algorithm). Recall may include a measure of the fraction of true positives out of (e.g., all) ground truth positives (e.g., objects that should have been identified). A high precision score may indicate that the algorithm is correctly identifying objects. A high recall score may indicate that the algorithm is not missing any objects.

Average Precision (AP) may be used as a metric for evaluating object detection algorithms. AP may include a measure of the precision at different levels of recall and then may average them. AP may provide a number (e.g., single number) that summarizes the overall performance of the algorithm. A higher AP score may indicate better object detection accuracy.

The F1 score may include the harmonic mean of precision and recall. The F1 score may provide a number (e.g., single number) that summarizes the overall performance of the algorithm. A higher F1 score may indicate better object detection accuracy.

Metrics may be used for object tracking tasks. The metrics (e.g., for object tracking tasks) may include one or more of the following: IoU, Precision and Recall, Mean Average Precision (mAP), or Tracking precision (TP) and Tracking Recall (TR).

IoU may be used for evaluating object tracking algorithms. In this case, IoU may measure the overlap between the ground truth bounding box and the predicted bounding box for each frame in the sequence. A higher IoU score may indicate better object tracking accuracy.

Precision and recall may be used to evaluate object tracking algorithms. In this case, precision may measure the fraction of frames where the algorithm correctly identified the object, while recall may measure the fraction of frames where the algorithm correctly tracked the object.

Mean Average Precision (mAP) may be used as a metric for evaluating object tracking algorithms. It may measure the average precision at different levels of overlap between the ground truth and predicted bounding boxes over the sequence (e.g., entire sequence). A higher mAP score may indicate better object tracking accuracy.

Tracking Precision (TP) and Tracking Recall (TR) may be used as a metric for object tracking. TP may measure the fraction of frames where the predicted bounding box overlaps with the ground truth bounding box by a certain threshold. TR may measure the fraction of ground truth bounding boxes that were successfully tracked. A high TP score may indicate that the algorithm is accurately tracking the object. A high TR score may indicate that the algorithm is not losing track of the object.

AI regression model evaluation may include (e.g., the process of) measuring the accuracy and performance of a regression model developed using artificial intelligence (AI) techniques. Regression analysis may include a statistical method used to predict the relationship between dependent and independent variables. Evaluation metrics used for regression models may include one or more of the following: Mean Squared Error; Root Mean Squared Error; Mean Absolute Error; R-squared; etc.

Mean Squared Error (MSE) may include a measure of the average squared error between the predicted and actual values. MSE may include (e.g., be represented as) the average of the squared differences between the predicted and actual values.

Root Mean Squared Error (RMSE) may include the square root of the mean squared error. RMSE may indicate the deviation of the predicted values from the actual values.

Mean Absolute Error (MAE) may include a measure of the average absolute difference between the predicted and actual values. This metric may be robust to outliers.

R-squared (R2) may be used to determined (e.g., may determine) how well the regression line fits the data by measuring the proportion of the variance explained by the model.

For other non-object related tasks, examples model performance metrics may include one or more of the following: Ranking Model Metrics (e.g., MRR, DCG, NDCG); Statistical Model Metrics (e.g., Correlation); Computer Vision Model Metrics (e.g., PSNR, SSIM, IoU); NLP Model Metrics (e.g., Perplexity, BLEU score); etc.

A system (e.g., 5G system) may provide limited bandwidth depending on the network congestion and the available radio resources. Uplink bandwidth may be limited (e.g., even more limited). WTRU/network server capabilities and network conditions may also change over time.

A data processing task (e.g., AI application task) may come with expected performance requirements measured using the various performance metrics described above.

A split point may produce (e.g., may be used to produce) intermediate data (e.g., a large amount of intermediate data), for example, depending on the complexity of the model. Intermediate data can be compressed to reduce the intermediate data size, for example, thus reducing the throughput (e.g., network bandwidth) used (e.g., required) to transmit.

Compression of Intermediate data may be associated with issues, for example, such as one or more of the following. Intermediate data may be large (e.g., exceptionally large). Intermediate data may include a set of tensor data with different data types, for example, such as byte, int16, int32, float32, float64. Applying the same compression scheme to tensors (e.g., all the tensors) may generate issues and result in bad accuracy, for example, regardless of data type, regardless of the level of the layer. Accuracy may depend on the level of loss that may occur at a (e.g., each) tensor, for example, if (e.g., when) intermediate data is compressed and/or decompressed. A tensor (e.g., some tensors) may carry input media information (e.g., like image dimension (e.g., tensor of datatype int)) and may not be modified, thus compressed. Tensors (e.g., some tensors) of type float32 may carry information (e.g., less essential information) and may be compressed with a higher rate with less consequence on the accuracy. Applying the same compression profile may be too restrictive, for example, according to the location of the tensors in the model (e.g., tensors located in the first layers of the model or tensors located on the last layers of the model). For example, tensors at the beginning of the model may be associated with (e.g., include, contain) data close (e.g., similar) to the input media and may be compressed in a certain way. Other solutions may be more adapted for tensors located at the end of the model. Errors generated by the compression on a tensor may result in larger errors on the rest of the model.

A compression scheme may be applied, for example, based on considering specific characteristics of tensors.

Split point information may be used and/or considered. Split point information may be carried (e.g., negotiated, transmitted) for considering tensor-based compression scheme to share and transmit between endpoints.

A compression scheme may be applied, for example, considering an impact on accuracy based on (e.g., depending on) the split point, beginning, or end of the model.

A list of encoding actions may be negotiated (e.g., transmitted) between endpoints (e.g., two endpoints, different parts of a model).

Compression profiles may be determined and/or selected for a (e.g., each) tensor, for example, for the candidate split point configurations to negotiate (e.g., transmit).

The compression profiles to apply to an (e.g., each) intermediate data tensor may fulfil a data processing task/requirement (e.g., the AI application task requirements, such as, for example accuracy requirements), for example an (e.g., expected) intermediate size with a (e.g., minimum) performance metric value.

The compression profiles may be negotiated (e.g., transmitted) between endpoints, for example, at the setup stage.

At an inference stage, a first endpoint may find the compression scheme to apply for a (e.g., each) tensor from a split point configuration (e.g., negotiated split point configuration). The first endpoint may apply the compression algorithm to a (e.g., each) tensor. The first endpoint may send the compressed tensor with split point information to the second endpoint (e.g., send a bitstream of the compressed tensor with split point information to the second endpoint). The second endpoint may find (e.g., determine) the compression scheme to apply for a (e.g., each) tensor from the split point configurations (e.g., negotiated split point configurations). The second endpoint may apply the corresponding compression profile scheme to decompress the compressed tensor, for example, to obtain the intermediate data to pass for inference.

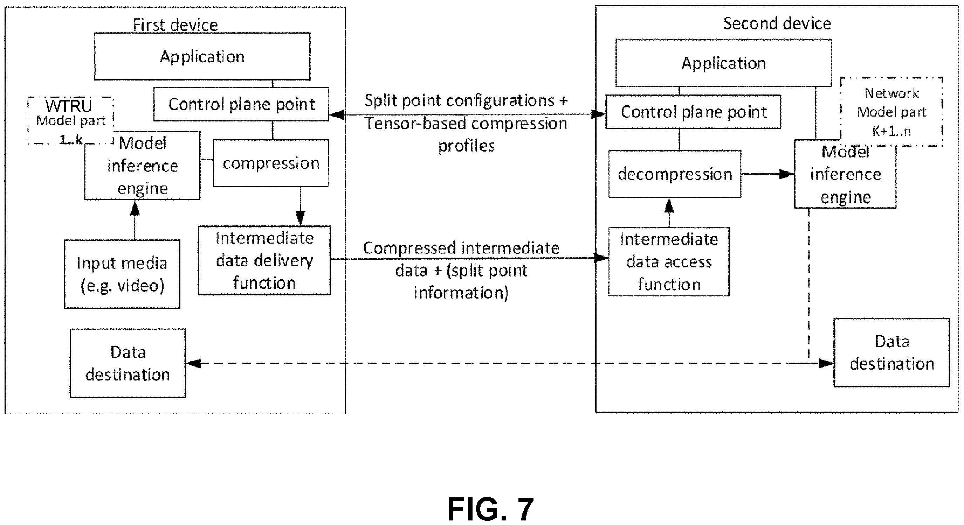

FIG. 7 illustrates an example of architecture for split inferencing using a tensor-based compression configuration profile.

A split points configurations format may include a list of different split point profiles. A (e.g., each) profile may include respective information on split point data characteristics and an associated compression profile to apply to a (e.g., each) intermediate data tensor.

Split points configurations may be transmitted and/or shared, for example, before (e.g., once before) starting to infer the second part of the model at the receiver side in the negotiation.

The first endpoint and the second endpoint may compute and/or assess the split point data characteristics and related compression characteristics, for example, to select compression profile(s) (e.g., the best compression profile(s)) for a (e.g., each) intermediate data tensor (e.g., to match the expected data processing task requirements, such as, AI application task requirements), for example, to achieve an expected intermediate size with a minimum accuracy ratio.

The first device (e.g., a WTRU; Network) may transmit or receive split point configurations and/or profiles, for example, in the control plane or the user plane (e.g., alongside intermediate data to the second device (e.g., respectively a network or WTRU).

At the inference loop, the first device may send (e.g., to the second endpoint) intermediate data (e.g., an intermediate data bitstream), for example, that may include split point information.

Negotiation and setup may be performed, for example, between endpoints.

A first and a second endpoint may negotiate (e.g., determine and transmit) the set of split point configurations candidates for the selected model (e.g., AI model). The first and second endpoint may negotiate (e.g., determine and transmit) a (e.g., specific) split point profile (e.g., which may include the selection of associated compression profiles) to apply on different intermediate data tensors having different tensor characteristics. The negotiation may be performed between control plane points on an (e.g., each) endpoint, for example, before inferencing is performed. Negotiation may include one or more of the following: selecting a split model (e.g., AI model); assessing environment conditions (e.g.,

network configurations, WTRU capabilities, network server capabilities, etc.); determining the expected split point data characteristics (e.g., size) and/or the expected/minimum associated metric performances (e.g., accuracy) to meet a data processing task (e.g., AI task requirements); negotiating split point configuration(s) and a split point profile that meets the data processing task requirements (e.g., AI task requirements); negotiating the format of split point configuration structure and underlying split point profile structure (e.g., on both endpoints); configuring the compression/decompression functions, for example, according to the associated compression profile parameters of the selected split point profile for a (e.g., each) identified intermediate data tensor; creating and/or initializing the inference runtime (e.g., on both sides/endpoints).

Negotiation may include assessing the environment (e.g., current environment) conditions, for example, such as network conditions, WTRU capabilities, and/or network server capabilities. Network conditions may be associated with delivering media and/or the intermediate data. Network conditions may be associated with, for example, the amount of data to transfer in an instance (e.g., one shot) for an image or at a specific frame rate for video, the required bandwidth in uplink and/or downlink with different impact on the related uplink, and/or downlink network latencies. Network inference latency may be considered (e.g., as an environment condition). Device and/or WTRU capabilities on running a model part may be considered, for example, such as the memory used (e.g., required memory), the processing capabilities, the energy consumption, and/or the impact on the inference latency. Network server capability considerations may include network side server capabilities (e.g., edge/cloud) on running a model part, the processing capabilities of the server, the energy consumption, and/or the impact on the inference latency.

Negotiation may include negotiating a split point configuration and/or a split point profile that meets the data processing tasks requirements (e.g., AI task requirements). The split point profile includes the negotiation of compression profile to apply on each intermediate data tensor. The negotiation may depend on common capabilities on both endpoints. For example, the negotiation may depend on compression capabilities available on both endpoints (e.g., a first compression capability associated with a first endpoint and a second compression capability associated with a second endpoint). Compression profiles available on a (e.g., each) endpoint may be determined. Different endpoints may implement different compression scheme(s) or profile(s) (e.g., based on processing capability associated with the operating system in use or based on the user's or application provides choice to enable compression profile on endpoints). Negotiation may depend on the tensor characteristics, for example, one or more of the following: intermediate data size, tensor data size, tensor name, a tensor type, a tensor shape, etc. Negotiation may depend on the neural network layer, for example, where the intermediate data tensor originates. Negotiation may depend on, for example, the neural network layer where the intermediate data tensor is input. Negotiation may depend on the characteristic of the neural network, for example, such as the deep neural network types (Multi-Layer Perceptrons (MLP), Convolutional Neural Networks (CNN), Recurrent Neural network (RNN) and/or the like. Negotiation may depend on the characteristics of the input network layer type of the intermediate data tensors (e.g., convolution, activation, full connected, pooling, batch normalization and/or the like). Negotiation may include the format of split points configuration structure and underlying split point profile structure on both endpoints.

The negotiation/selection of split configuration and split point profile (e.g., including the selection of a fine-grain compression profile at a tensor granularity) may be based on selecting intermediate data size, an intermediate data size ratio, performances value(s), or on an expected performance metric ratio (e.g., a 20% ratio of intermediate size reduction with minimum accuracy score of 60; an intermediate size 90 MB with minimum accuracy score ratio 90%).

Inference may be performed. An inference loop may be used.

Inference may be performed, for example, after negotiation. The inference loop may include inferencing input media data in the first endpoint. The inference loop may include providing intermediate data to the second endpoint for inference to produce inference results in the second endpoint. Inference results in the second endpoint may include selecting or reselecting a split point configuration and a split point profile (e.g., where a split point profile may be used to determine the compression function to use). the inference loop may include updating the compression/decompression function to apply on an (e.g., each) intermediate data tensor required with the compression profile associated to each tensor, for example, based on reselection or renegotiation of a split point profile.

In inference, a first endpoint may perform one or more of the following. A first endpoint may input media data (e.g., use input media data). The first endpoint may infer a first model part. The first endpoint may compress intermediate data tensor(s) with the associated compression format. The first endpoint may transmit data (e.g., in a bitstream), for example, with associated metadata on the split point configuration selection (e.g., to inform the second endpoint of a change in case of dynamic update). The first endpoint may transmit data, for example, based on the reselection of a split point profile. The first endpoint may transmit data, for example, for an update of fine tune compression parameters.

In inference, a second endpoint may perform one or more of the following. The second endpoint may receive intermediate data. The second endpoint may obtain and/or read split point configuration metadata (e.g., such as the split point identifier from the data bitstream). The second endpoint may update the compression/decompression function to apply on each intermediate data tensor required with the compression profile negotiated for a (e.g., each) tensor, for example, based on reselection or renegotiation of a split point configuration. The second endpoint may obtain and/or decompress the intermediate data tensors, for example, with the selected tensor compression profiles from the data bitstream. The second endpoint may pass decompressed intermediate data to an model inference engine. The second endpoint may infer the second model part (e.g. part two of the model). The second endpoint may pass output inference results to a data destination.

A negotiated data format may be used and/or provided. Details associated with a negotiated data format are provided herein.

The negotiated data format may include a split point configuration structure format, for example, that may include a list of candidates split point profiles that may be associated with an associated compression profile format for a (e.g., each) intermediate data tensor.

A split points configuration structure format may be described herein. A split points configuration structure may include a list of one or more of the following. The split points configuration structure may include a list of a split point identifiers. The split point identifier(s) may be used to retrieve the corresponding split point configuration and the associated compression profile list. A set of split point configurations may be negotiated. The selection of a split point configuration may be adaptive and change overtime at the inference loop stage. The split point identifier may include a split point name or a split point number. A split point configuration structure may include a split point profile list. The split point profile list may include a split point profile format structure.

A split point profile format may be associated with a tensor-based compression profile.

A selected split point configuration may determine compression profile(s) to apply on a tensor to each intermediate data (e.g., associated tensor-based compression).

A split point profile format structure may include one or more of the following. A split point profile format structure may include a split point profile identifier. A split point profile identifier may include a profile identification number (e.g., unique profile identification number) over the (e.g., all) split candidate point configurations.

A split point profile format structure may include a split point profile description. A split point profile description may include information on low/high Compression, low/high performance metric value, and/or the like.

A split point profile format structure may include split point characteristic(s) (e.g., intermediate data characteristics or a list of immediate data tensors). Intermediate data characteristics may include one or more of the following: intermediate data size, intermediate data ratio, performance metric value, performance metric ratio; etc. The Intermediate data size may include a compressed intermediate data size. For example, the size may be a baseline data size, e.g., if there is no compression. An intermediate data ratio may include a ratio of the original size of the compressed intermediate data to the size of the intermediate data. The intermediate data ratio may indicate how much the data has been compressed, the ratio 5:1 or 5/1 means the size has been reduced from a factor 5 Eq. 4.

$$compression\ ratio\ = \frac{uncompressed\ intermediate\ size}{compressed\ intermediate\ size} \qquad Eq.\ 4$$

the intermediate data ratio may be expressed in percentage, where 0,8 means a reduction of 80 % of the baseline size according to Eq. 5 and Eq. 6

$$compression\ ratio\ = \frac{uncompressed\ intermediate\ size- compressed\ intermediate\ size}{uncompressed\ intermediate\ size} \qquad Eq.\ 5$$

$$compression\ ratio\ percentage\ = compression\ ratio * 100 \qquad Eq.\ 6$$

The measured performance metric value may depend on the performance metrics used, e.g., Map score, F1 score, accuracy. The performance metric ratio may include the ratio of the performance metric value obtained after compression to the baseline performance metric value (e.g., without applying the associated compression profile). The performance metric ratio may indicate how much accuracy has been affected, for example, expressed in percentage 90% of original accuracy.

A split point profile format structure may include a list of intermediate data tensors. A list of intermediate data tensors may include one or more of the following: tensor name (e.g., a name (e.g., exact name) of the tensor sent from a sender endpoint to a receiver endpoint); a tensor shape (e.g., the tensor shape the receiver endpoint needs to know before applying the decompression function associated to the compression profile); a tensor data type (e.g., the data type of each output intermediate data tensor); a tensor compression profile (e.g., which may comprises the necessary compression information and parameters to apply compression and symmetric decompression function to intermediate data); etc.

An associated compression profile format may be described herein.

An associated compression profile may include one or more of the following: a compression algorithm identifier (e.g., a unique identifier that describe a compression profile with its settings and parameters); a compression algorithm name (e.g., name of the compression algorithms applied to tensor data, e.g., feature compression for machines (FCM)), neural network coding (NNC)); a compression algorithm version/profile (e.g., reference version or profile of the selected compression algorithm); compression algorithm specific parameters; a quantization Step (e.g., in lossy compression algorithms like JPEG, a quantization step may determine the level of detail preserved in the compressed intermediate data); a quantization parameter (e.g., for NNC, this parameter (qp) may control the quantization step size and thus the rate-performance trade-off for all weight parameters); an entropy coding table (e.g., the parameters related to entropy encoding techniques, e.g., such as Huffman coding, arithmetic coding, or Golomb coding); a compression level (e.g., from lower compression ratios to slower compression with higher compression ratios); a block size (e.g., referring to the size of intermediate data size division when applying the compression algorithm, for example, where a (e.g., each) block may be processed independently); a dictionary size (e.g., the size of the sliding window or the maximum size of the dictionary used for compression); a bit depth (e.g., the number of bits used to represent a pixel or audio sample for example, for example, where lower bit depths can lead to loss of quality but higher compression ratios); etc.

An example associated compression profile description may be provided, for example, as shown in Table 2.

Table 2: Compression Profiles Table

| Metadata category | Metadata type | | Definition | Metadata type descriptio n (Examples ) |
|---|---|---|---|---|
| Compressio n algorithm profile | Compression algorithm description | | Identifies the compression algorithm(s) profile that can be applied to the intermediate data. | NONE, Quantization, FC_VCM, SNAPPY Neural Network Coding |
| | Compression algorithm profile level identifier | | Identifies the compression algorithm profile level. A list of supported profiles can be negotiated between endpoints. | FCM 5.1, FCM 5.3, FCM 6.4 NNC 5.7.9, NNC 5.8, NNC 6.4 |
| | Compression algorithm profile parameter set | | List of compression parameters of the selected compression algorithm that fulfil the compression profile. | Param 1 Param 2 e.g. Qp Quantization Parameter = - 15 |

An associated compression profile example may be described herein, for example, in JavaScript object notation (JSON). Table 3 illustrates an example JSON compression profile table.

Table 3: Example Compression Profile Table

{"compression profiles":

(continued)

```
[
    {"Compression profile id": 0,
     "Compression profile name": "no compression",
     "Compression level":1
    },
    {"Compression profile id": 1,
     "Compression profile name": "Quantization 32 bits to 16 bits",
     "version/profile": "NumPy 1.26.2",
     "Compression level":0.5
    },
    {"Compression profile id": 2,
     "Compression profile name": "NNC (Neural Network coding)",
     "version/profile": "Main 1.0.0",
     "Quantization parameter": -26,
     "Compression level":0.28
    },
    {"Compression profile id": 3,
     "Compression profile name": "NNC (Neural Network coding)",
     "version/profile": "Main 1.0.0",
     "Quantization parameter": -18,
     "Compression level":0.26
    },
   {"Compression profile id": 4,
    "Compression profile name": "NNC (Neural Network coding)",
    "version/profile": "Main 1.0.0",
    "Quantization parameter": -14,
    "Compression level":0.24
   },
   {"Compression profile id": 5,
    "Compression profile name": "NNC (Neural Network coding)",
    "version/profile": "Main 1.0.0",
    "Quantization parameter": -10,
    "Compression level":0.22
    },
    {"Compression profile id": 6,
    "Compression profile name": "NNC (Neural Network coding)",
    "version/profile": "Main 1.0.0",
    "Quantization parameter": -,
    "Compression level":0.20
    },
    {"Compression profile id": 7,
    "Compression profile name": "FCM (Feature Compression for Machine",
    "version/profile": "Main 1.4.2",
    "Compression level":0.4
    },
    {"Compression profile id": 8,
    "Compression profile name": " FCM (Feature Compression for Machine",",
    "version/profile": "Main 2.5.0",
    "Compression level":0.3
    },
    {"Compression profile id": 9,
    "Compression profile name": " FCM (Feature Compression for Machine",",
    "version/profile": "Main 3.5.0",
    "Compression level":0.3
    },
]
}
```

Split point configuration format may be provided, for example, with tensor-based profiles

Tensor-based compression profiles negotiated between the two endpoints according to the split point configuration may be used to identify the compression profile and settings associated to intermediate data tensor of a split point configuration (e.g., as shown in Table 4).

Table 4: Example Tensor-Based Compression Profiles

| Metadata category | Metadata type | Definition | Metadata type descriptio n (Examples ) | |
|---|---|---|---|---|
| **Split point information** | **Split point identifier** | An identifier of the split point in a description of a computing graph, may be generated by a neural network description language such as ONNX/NNEF. Identifiers must guarantee unique identification of a specific split point. | Node 3 | |
| | **Split point profile description** | information on Low/Medium/High Compression, Low/Medium/High performance metric value | Low compres-sion, High perfor-mance | |
| **Split point compressio n configuratio n** | **Compressed intermediate data size** | The compressed intermediate data size. If no compression, the size is the baseline data size. | 12 Mbytes | |
| | **Compressed intermediate data size ratio** | The ratio of the original size of the compressed intermediate data to the size of the intermediate data. It indicates how much the data has been compressed, for example expressed in percentage 90%. If no compression, the ratio is 1.0. | 90 % from baseline data size. | |
| | **Compression Performance metric value** | The measured performance metric value depending on the performance metrics used, e.g. Map score, F1 score, accuracy. | F1 Score, Map score | |
| | **Compression Performance metric ratio** | The ratio of the performance metric value obtains after compression to the baseline performance metric value without applying the associated compression profile. for example, it indicates how much accuracy has been affected, for example expressed in percentage 90% of original accuracy. | 97% from baseline model score | |
| **Intermediat e data tensors** | **Tensor list** | | List of tensors or tensors that com-posed intermedi-ate data | e.g. list of ONNX tensor names Ten-sor1, Ten-sor2 |
| | | **Tensor shape** | Tensor shape output. The output tensor shape may be different from input and uncompressed tensor shape or may be transposed | [1,64,64,64]. |
| | | **Tensor data type** | The type of the tensor | Int32, Float 64, |
| | | **Compression algorithm profile Identifier** | Identifies the se-lected compres-sion algorithm profile | None FCM 1.2 |

Example split point configuration profile with tensor-based compression profiles may be described herein.

An example of split point profile list for a given split point configuration (e.g., for example at split point node 5) may be described, for example, as shown in Table 5.

Table 5: Example List of Split Point Compression Profiles

| List of Profiles | Contents of Profiles |
|---|---|
| 1st Profile | • Split point profile identifier #1<br>• Split point profile description: no compression<br>• Split point data characteristics<br>  ◦ Baseline intermediate data size: 100MB<br>  ◦ Baseline performance metric value: Map score value 50<br>  ◦ intermediate data ratio: 100%<br>  ◦ performance metric ratio :100%<br>• intermediate Data Tensors List<br>  ◦ Tensor1, [1,64,64,64]. Int32, Compression profile #0 (no compression)<br>  ◦ Tensor2, float32, [1,256,75,75], Compression profile #0<br>  ◦ Tensor3, float32, [1,256,75,75], Compression profile #0<br>  ◦ Tensor4, float32, [1,8,16,8], Compression profile #0 |
| 2nd Profile | • Split point profile identifier #2<br>• Split point profile description: low compression - high accuracy<br>• Split point data characteristics<br>  ◦ Compressed intermediate data size: 90 Mb<br>  ◦ Compressed performance metric value: Map score value 50<br>  ◦ intermediate data ratio: 90%<br>  ◦ performance metric ratio: 99%<br>• List of intermediate data tensors<br>  ◦ Tensor1, [1,64,64,64], Int32, Compression profile #0 (no compression) |
| |   ◦ Tensor2, float32, [1,256,75,75], Compression profile #1<br>  ◦ Tensor3, float32, [1,256,75,75], Compression profile #2<br>  ◦ Tensor4, float32, [1,8,16,8], Compression profile #1 |
| 3rd Profile | • Split point profile identifier #3<br>• Split point profile description: medium compression - medium accuracy<br>• Split point data characteristics<br>  ◦ Compressed intermediate data size: 80 Mb<br>  ◦ Compressed performance metric value: Map score value 45<br>  ◦ intermediate data ratio: 50%<br>  ◦ performance metric ratio: 90%<br>• List of intermediate data tensors<br>  ◦ Tensor1, [1,64,64,64]. Int32, Compression profile #0 (no compression)<br>  ◦ Tensor2, float32, [1,256,75,75], Compression profile #3<br>  ◦ Tensor3, float32, [1,256,75,75], Compression profile #5<br>  ◦ Tensor4, float32, [1,8,16,8], Compression profile #4 |

(continued)

| List of Profiles | Contents of Profiles | |
|---|---|---|
| **4th Profile** | • Split point profile identifier #4<br>• Split point profile description: high compression - low accuracy<br>• Split point data characteristics<br> ○ Compressed intermediate data size: 90 Mb<br> ○ Compressed performance metric value: Map score value 40<br> ○ Intermediate data ratio: 10%<br> ○ performance metric ratio: 80%<br>• List of intermediate data tensors<br> ○ Tensor1, [1,64,64,64]. Int32, Compression profile #0 (no compression)<br> ○ Tensor2, float32, [1,256,75,75], Compression profile #7<br> ○ Tensor3, float32, [1,256,75,75], Compression profile #6<br> ○ Tensor4, float32, [1,8,16,8], Compression profile #8 | |

Bitstream data may be transmitted.

The bitstream transmitted between a first endpoint to a second endpoint may include information and/or data (e.g., all the necessary information and/or data) for the second endpoint to retrieve the split point configuration required to apply the decompression function associated with the compression profile used to compress the received intermediate data tensor.

A tensor data bitstream may be transmitted, provided, and/or described herein.

A tensor data bitstream may use (e.g., rely on) the split point configuration that have been negotiated between a sender and a receiver endpoint. The header may include information useful to retrieve the split point configuration and/or the different compression profile to apply for a (e.g., each) tensor, for example, if (e.g., when) the split point has been updated (e.g., Split point identifier presence, Split point identifier). A compression indication (e.g., compression flag, e.g., compressed data flag) may aim to avoid taking time to retrieve a compression profile.

Table 6: Example Intermediate Data Bitstream Header and Intermediate Data Bitstream Data

| Intermediate data bit-stream head-er | Bitstream flag | | Short bit field to describe the metadata. | |
|---|---|---|---|---|
| | | Split point identifier presence | It Indicates whether the optional split point identifier field below is present or not. This may be useful when there is as split pint reselection and not required otherwise. | 0:No, 1: Yes |
| | | Tensor element number | It indicates the number of tensors including in the tensor array. | Value 10 |
| | | Compressed data flag | It indicates whether date is compressed or not. If the flags is set to 'NO' there is no need to parse the profile to find an associated profile for the tensor. | 0:No, 1: Yes |
| | Split point identifier (optional) | | An identifier of the split point in a description of a computing graph when the split point configuration has changed | Nb:10, 75 Name: Layer_10, |
| | Bitstream size | | Total size of the bitstream | 129 MB |
| Intermediate data bitstream data | Tensors array list | | This is a list of the tensor including in the bitstream as an incremental list of tensor data with tensor id | |
| | | Tensor index | The index of the tensor | 1 |
| | | Tensor length | The size of the tensor element in bytes | 25 Mbytes |
| | | Tensor bitstream data | This payload of the uncompressed or compressed data | [] |

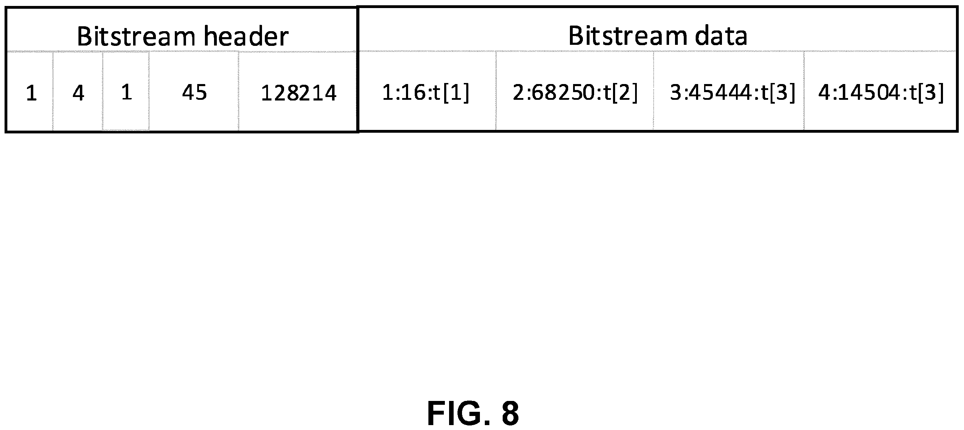

An example tensor data bitstream may be described herein. FIG. 8 illustrates an example basic intermediate data bitstream. For example, a basic intermediate data bitstream may include one or more of the following. The basic intermediate data bitstream may include a header. The header may indicate (e.g., include) one or more of the following: a presence of the split point identifier (e.g., 1); a tensor element number (e.g., 4); a compressed data flag (e.g., 1); a split point identifier (e.g., 45); a bitstream size (e.g.,128214); etc. The basic intermediate data bitstream may include data with tensors (e.g., size: data). For example, the data with tensors may include one or more of the following: 1:16 :t[1]; 2 :68250:t[2]; 3: 45444:t[3]; 4 :14504:t[4]; etc.

Although features and elements are described above in particular combinations, one of ordinary skills in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable media include electronic signals (transmitted over wired or wireless connections) and computer-readable storage media. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

**Claims**

1. A device for media encoding, comprising:
   a processor configured to:

   for an intermediate data tensor associated with intermediate data of a data processing model,

   determine a performance threshold associated with a data processing task to be performed by the device, and
   determine a tensor characteristic of the intermediate data tensor;

   determine a compression profile associated with the intermediate data tensor based on the performance threshold associated with the data processing task to be performed by the device, the tensor characteristic of the intermediate data tensor, and a performance metric associated with the compression profile; and
   send, via a control plane, an indication of an association of the compression profile with the intermediate data tensor.

2. The device of claim 1, wherein the processor is configured to:

   generate a compressed intermediate data tensor based on the intermediate data tensor and the compression profile associated with the intermediate data tensor; and
   send the compressed intermediate data tensor to a media decoding device.

3. The device of claim 1, wherein, the data processing model is an artificial intelligence (AI) processing model, and the data processing task is an AI task, and wherein the performance threshold indicates a minimum performance for performing the AI task, and the performance metric associated with the compression profile is a performance score associated with the compression profile.

4. The device of claim 3, wherein the minimum performance for performing the AI task comprises a minimum accuracy or a maximum latency required for performing the data processing task.

5. The device of claim 1, wherein the processor is configured to:
   determine an available bandwidth for a downlink (DL) or uplink (UL) transmission associated with the device and an amount of data to be transmitted via the DL or UL transmission, wherein the compression profile associated with the intermediate data tensor is determined further based on the available bandwidth for the DL or UL transmission and the amount of data to be transmitted via the DL or UL transmission.

6. The device of claim 1, wherein the processor is configured to:
   determine a processing capability associated with the device and a processing capability associated with a media decoding device, wherein the compression profile associated with the intermediate data tensor is determined further based on the processing capability associated with the device and the processing capability associated with the media decoding device.

7. The device of claim 1, wherein the processor is configured to:
determine a first available compression profile capability associated with the device and a second available compression profile capability associated with a media decoding device, wherein the compression profile associated with the intermediate data tensor is determined further based on the first available compression profile capability and the second available compression profile capability.

8. The device of claim 1, wherein the processor is configured to:
include, in a header of an intermediate data packet, one or more indications associated with a split point profile, wherein the one or more indications comprise a data compression indication and a tensor identifier for the intermediate data tensor, and wherein the data compression indication indicates whether intermediate data represented by the intermediate data tensor is compressed.

9. The device of claim 8, wherein the one or more indications associated with the split point profile further comprises an indication of a presence or absence of a split point identifier, a number of tensor elements associated with the intermediate data tensor, a length of the intermediate data tensor, a tensor array list associated with a bitstream via which the intermediate data tensor is sent, or a tensor bitstream data.

10. A device for media decoding, comprising:
a processor configured to:

obtain, via a control plane, an indication of an association of a compression profile with an intermediate data tensor;
receive an intermediate data tensor identifier in a split point profile of a data processing model;
obtain the intermediate data tensor;
determine, based on the intermediate data tensor identifier, which split point profile is applicable to the intermediate data tensor;
generate a decompressed intermediate data tensor based on the split point profile and the association of the compression profile with the intermediate data tensor;
determine an output of the data processing model based on applying a data compression task to the decompressed intermediate data tensor; and
send the output of the data processing model.

11. The device of claim 10, wherein the processor is configured to:
receive, in a header of an intermediate data packet, one or more indications associated with the split point profile, wherein the one or more indications comprise the intermediate data tensor identifier and a data compression indication, wherein the data compression indication indicates whether intermediate data represented by the intermediate data tensor is compressed, and wherein the one or more indications associated with the split point profile further comprises an indication of a presence or absence of a split point identifier, a number of tensor elements associated with the intermediate data tensor, a length of the intermediate data tensor, a tensor array list associated with a bitstream via which the intermediate data tensor is sent, or tensor bitstream data..

12. A method for media encoding, comprising:

for an intermediate data tensor associated with intermediate data of a data processing model,

determining a performance threshold associated with a data processing task to be performed by a device, and
determining a tensor characteristic of the intermediate data tensor;

determining a compression profile associated with the intermediate data tensor based on the performance threshold associated with the data processing task to be performed by the device, the tensor characteristic of the intermediate data tensor, and a performance metric associated with the compression profile; and
sending, via a control plane, an indication of an association of the compression profile with the intermediate data tensor.

13. The method of claim 12, wherein the performance threshold indicates a minimum performance for performing the data processing task, and the performance metric associated with the compression profile is a performance score associated with the compression profile, and wherein the minimum performance for performing the data processing task comprises a minimum accuracy or a maximum latency required for performing the data processing task.

14. A method for media decoding, comprising:

obtaining, via a control plane, an indication of an association of a compression profile with an intermediate data tensor;
receiving an intermediate data tensor identifier in a split point profile of a data processing model;
obtaining the intermediate data tensor;
determining, based on the intermediate data tensor identifier, that the split point profile is applicable to the intermediate data tensor;
generating a decompressed intermediate data tensor based on the split point profile and the association of the compression profile with the intermediate data tensor;
determining an output of the data processing model based on the decompressed intermediate data tensor; and
sending the output of the data processing model.

15. The method of claim 14, comprising:
receiving, in a header of an intermediate data packet, one or more indications associated with the split point profile, wherein the one or more indications comprise the intermediate data tensor identifier and a data compression indication, and wherein the data compression indication indicates whether intermediate data represented by the intermediate data tensor is compressed.

FIG. 1A

**FIG. 1B**

**FIG. 1C**

EP 4 672 765 A1

**FIG. 1D**

116

113
RAN

180a
gNB

N2

N3

116

Xn

180b
gNB

N2

N3

116

Xn

180c
gNB

N2

N3

102a

102b

102c

115
Core Network

182a
AMF

N11

183a
SMF

184a
UPF

N4

N6

185a
DN

182b
AMF

N11

183b
SMF

184b
UPF

N4

N6

185b
DN

108
PSTN

110
Internet

112
Other
Networks

EP 4 672 765 A1

33

200

Pre-encoding processing 201

Image Partitioning 202

Transform 225

Quantization 230

Entropy Coding 245

Inverse Quantization 240

Inverse Transform 250

255

Intra prediction 260

In-loop Filters 265

Reference Picture Buffer 280

Motion Compensation 270

Motion Estimation 275

205

210

**FIG. 2**

**300**

**FIG. 3**

**FIG. 4**

**FIG. 5**

FIG. 6

FIG. 7

| Bitstream header | | | | | Bitstream data | | | |
|---|---|---|---|---|---|---|---|---|
| 1 | 4 | 1 | 45 | 128214 | 1:16:t[1] | 2:68250:t[2] | 3:45444:t[3] | 4:14504:t[3] |

**FIG. 8**

EP 4 672 765 A1

Europäisches
Patentamt

European
Patent Office

Office européen
des brevets

# EUROPEAN SEARCH REPORT

**Application Number**

EP 24 30 6004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/327359 A1 (AHUJA NILESH A [US] ET AL) 13 October 2022 (2022-10-13) * figures 8,9 * * paragraph [0109] - paragraph [0156] * ----- | 1-15 | INV. H04N21/442 H04N21/466 H04N21/658 H04N21/234 |
| X | WO 2024/094833 A1 (INTERDIGITAL CE PATENT HOLDINGS SAS [FR]) 10 May 2024 (2024-05-10) * figures 5, 8, 9p * * paragraph [0075] - paragraph [0175] * ----- | 1-15 | H04N21/24 H04N21/2662 H04N21/44 H04N21/462 H04N21/61 G06N3/045 |
| A | "3rd Generation Partnership Project; Technical Specification Group Services and System Aspects; Study on Artificial Intelligence and Machine Learning in 5G media services; (Release 19)", 3GPP STANDARD; TECHNICAL REPORT; 3GPP TR 26.927, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , no. V0.7.0 11 April 2024 (2024-04-11), pages 1-54, XP052599453, Retrieved from the Internet: URL:https://ftp.3gpp.org/Specs/archive/26_series/26.927/26927-070.zip 26927-070-cl.docx [retrieved on 2024-04-11] * sections 5 and 6; page 13 * ----- | 1-15 | G06N3/0495 |

-/--

**TECHNICAL FIELDS SEARCHED (IPC)**

H04N
G06N

The present search report has been drawn up for all claims

| Place of search | Date of completion of the search | Examiner |
|---|---|---|
| Munich | 22 November 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.................................................................

& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

Application Number

EP 24 30 6004

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ZHIWEI HAO ET AL: "Multi-Agent Collaborative Inference via DNN Decoupling: Intermediate Feature Compression and Edge Learning", ARXIV.ORG, CORNELL UNIVERSITY LIBRARY, 201 OLIN LIBRARY CORNELL UNIVERSITY ITHACA, NY 14853, 24 May 2022 (2022-05-24), XP091231589, * section 6.1, 2nd paragraph * ----- | 1-15 | |
| A | LI NAN ET AL: "Attention-Based Feature Compression for CNN Inference Offloading in Edge Computing", ICC 2023 - IEEE INTERNATIONAL CONFERENCE ON COMMUNICATIONS, IEEE, 28 May 2023 (2023-05-28), pages 967-972, XP034451370, DOI: 10.1109/ICC45041.2023.10279110 [retrieved on 2023-10-23] * page 972, left-hand column, line 16 - line 24; figure 5 * ----- | 1-15 | TECHNICAL FIELDS SEARCHED (IPC) |

The present search report has been drawn up for all claims

| Place of search | Date of completion of the search | Examiner |
|---|---|---|
| Munich | 22 November 2024 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

# EP 4 672 765 A1

## ANNEX TO THE EUROPEAN SEARCH REPORT
## ON EUROPEAN PATENT APPLICATION NO.

EP 24 30 6004

22-11-2024

| Patent document cited in search report | Publication date | Patent family member(s) | Publication date |
|---|---|---|---|
| US 2022327359 A1 | 13-10-2022 | NONE | |
| WO 2024094833 A1 | 10-05-2024 | NONE | |

EPO FORM P0459